(19) Europäisches Patentamt
European Patent Office
Office européen des brevets

(11) EP 4 307 061 A1

(12) EUROPEAN PATENT APPLICATION
published in accordance with Art. 153(4) EPC

(43) Date of publication:
17.01.2024 Bulletin 2024/03

(51) International Patent Classification (IPC):
G05B 19/418 (2006.01)  G06Q 50/04 (2012.01)

(21) Application number: 21930397.1

(52) Cooperative Patent Classification (CPC):
G05B 19/418; G06Q 50/04; Y02P 90/30

(22) Date of filing: 21.12.2021

(86) International application number:
PCT/JP2021/047191

(87) International publication number:
WO 2022/190552 (15.09.2022 Gazette 2022/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 09.03.2021 JP 2021037638

(71) Applicant: OMRON Corporation
Kyoto 600-8530 (JP)

(72) Inventors:
• UJITA, Yasuhiro
  Kyoto-shi, Kyoto 600-8530 (JP)
• MIYAMOTO, Kota
  Kyoto-shi, Kyoto 600-8530 (JP)

(74) Representative: Mewburn Ellis LLP
Aurora Building
Counterslip
Bristol BS1 6BX (GB)

(54) **INFORMATION PROCESSING DEVICE, INFORMATION PROCESSING METHOD, AND INFORMATION PROCESSING PROGRAM**

(57) An information processing device includes: a relationship identifying unit configured to identify a first causal relationship based on data of a connection state and an order relationship of a plurality of machineries that constitute a manufacturing line, the first causal relationship being between the plurality of machineries in a process performed on the manufacturing line; a relationship acquiring unit configured to acquire a second causal relationship between a plurality of events related to the plurality of machineries in a process performed on the manufacturing line according to user setting; and a relationship synthesizing unit configured to generate a third causal relationship obtained by integrating the first causal relationship and the second causal relationship.

FIG.4

EP 4 307 061 A1

**Description**

TECHNICAL FIELD

The present disclosure relates to an information processing device, an information processing method, and an information processing program.

BACKGROUND ART

A manufacturing line in a factory or the like includes a plurality of machineries such as a conveyor and a robot arm. When an abnormality occurs in any of the machineries on the manufacturing line, there is a possibility that manufacturing of products stops to cause a large damage. Therefore, in a factory or the like, a maintenance person regularly goes around the manufacturing line and checks whether or not there is an occurrence or a sign of an abnormality.

When an occurrence or a sign of an abnormality is detected in the manufacturing line, a true cause of the abnormality may exist in a machinery before a machinery in which the abnormality is detected. Therefore, in order to identify the true cause of the abnormality, it is important to grasp a causal relationship between the machineries in the manufacturing line. However, since the number of machineries constituting a manufacturing line increases and an operation condition of each machinery can change with each day, it is difficult to accurately grasp the causal relationship of all the machineries.

Therefore, conventionally, a skilled maintenance person grasps a causal relationship between a plurality of machineries constituting a manufacturing line based on one's own experience and intuition, and detects an abnormality or a sign of an abnormality occurring in the manufacturing line. In order to allow an unskilled maintenance person to perform such maintenance work, it is desired to develop a technique for visualizing a causal relationship between a plurality of machineries constituting a manufacturing line.

For example, by the device disclosed in PTL 1, a technique for visualizing abnormality detection by easily modeling a relationship between devices on a manufacturing line is shown.

CITATION LIST

PATENT LITERATURE

PTL 1: Japanese Patent Laying-Open No. 2009-64407

SUMMARY OF INVENTION

TECHNICAL PROBLEM

On the other hand, as a type of abnormalities, there is an event such as a physical phenomenon or a state that cannot be sensed as data, and in a case where an abnormality of this type occurs, it is not possible to identify the abnormality even when this model is used.

The present disclosure has been made in order to solve the above problems, and provides an information processing device, an information processing method, and an information processing program, all of which are capable of incorporating an event that cannot be sensed as data into a causal relationship.

SOLUTION TO PROBLEM

According to an example of the present disclosure, an information processing device comprising: a relationship identifying unit configured to identify a first causal relationship based on data of a connection state and an order relationship of a plurality of machineries that constitute a manufacturing line, the first causal relationship being between the plurality of machineries in a process performed on the manufacturing line; a relationship acquiring unit configured to acquire a second causal relationship between a plurality of events related to the plurality of machineries in a process performed on the manufacturing line according to user setting; and a relationship synthesizing unit configured to generate a third causal relationship obtained by integrating the first causal relationship and the second causal relationship. According to this configuration, since the second causal relationship between the plurality of events can be acquired and integrated, it is possible to incorporate an event that cannot be sensed as data into a causal relationship.

The first causal relationship includes a plurality of first nodes provided respectively for a plurality of variables set for the plurality of machineries, and first edge information indicating a connection between the plurality of first nodes. The second causal relationship includes a plurality of second nodes provided respectively for the plurality of events, and second edge information indicating a connection between the plurality of second nodes. According to this configuration, since the causal relationship includes the nodes and the edge information, it is possible to easily grasp the causal relationship.

Each of the second nodes is provided so as to be able to set attribute information including a variable related to an event, and the relationship synthesizing unit: determines whether or not there is a first node corresponding to a variable identical to the variable set in the attribute information of each of the second nodes; puts the second node together with the corresponding first node, when it is determined that there is a first node corresponding to the identical variable; and generate the third causal relationship based on the first and the second edge information. According to this configuration, since the third causal relationship is generated by collecting the nodes corresponding to the same variable, it is possible to easily incorporate an event into the causal relationship.

The information processing device further comprising a relationship setting unit configured to set the second causal relationship according to user setting. According to this configuration, it is possible to set the second causal relationship.

The relationship setting unit has a setting screen capable of accepting setting of attribute information including a variable related to an event corresponding to each of the second nodes. The setting screen displays a list selection screen of the plurality of variables used in a program for controlling the plurality of machineries, and updates a listing order of the plurality of variables in the list selection screen according to user selection. According to this configuration, it is possible to easily set the variables according to the user selection.

The second causal relationship corresponds to a causal relationship between a plurality of events based on a failure mechanism of the plurality of machineries in the process performed on the manufacturing line. According to this configuration, identification of a failure factor is facilitated since the causal relationship between the plurality of events based on the failure mechanism is acquired.

An information processing method according to another example of the present disclosure comprising: identifying a first causal relationship based on data of a connection state and an order relationship of a plurality of machineries that constitute a manufacturing line, the first causal relationship being between the plurality of machineries in a process performed on the manufacturing line; acquiring a second causal relationship between a plurality of events related to the plurality of machineries in a process performed on the manufacturing line according to user setting; and generating a third causal relationship obtained by integrating the first causal relationship and the second causal relationship. According to this configuration, since the second causal relationship between the plurality of events can be acquired and integrated, it is possible to incorporate an event that cannot be sensed as data into a causal relationship.

An information processing program according to still another example of the present disclosure causes a computer to execute the steps comprising: identifying a first causal relationship based on data of a connection state and an order relationship of a plurality of machineries that constitute a manufacturing line, the first causal relationship being between the plurality of machineries in a process performed on the manufacturing line; acquiring a second causal relationship between a plurality of events related to the plurality of machineries in a process performed on the manufacturing line according to user setting; and generating a third causal relationship obtained by integrating the first causal relationship and the second causal relationship. According to this configuration, since the second causal relationship between the plurality of events can be acquired and integrated, it is possible to incorporate an event that cannot be sensed as data into a causal relationship.

ADVANTAGEOUS EFFECTS OF INVENTION

According to the present disclosure, it is possible to incorporate an event that cannot be sensed as data into a causal relationship.

BRIEF DESCRIPTION OF DRAWINGS

Fig. 1 is a diagram schematically illustrating an example of a use scene of a process analysis device 1 which is one form of an information processing device according to an embodiment.
Fig. 2 is a diagram schematically illustrating an example of a hardware configuration of process analysis device 1 according to the embodiment.
Fig. 3 is a diagram schematically illustrating an example of a hardware configuration of a PLC 2 according to the embodiment.
Fig. 4 is a diagram schematically illustrating an example of a software configuration of process analysis device 1 according to the embodiment.
Fig. 5 is a flowchart showing an example of a processing procedure of process analysis device 1 according to the embodiment.

Fig. 6 is a diagram for schematic illustration of an operation of a first analysis unit 113.

Fig. 7 is a diagram illustrating an example of directed graph information that has been created according to the embodiment.

Fig. 8 is a diagram for illustration of FTA according to the embodiment.

Fig. 9 is a diagram for illustration of a flow of correcting FTA according to the embodiment.

Fig. 10 is a flowchart for illustration of a subroutine of processing of analyzing and editing a node event in a relationship setting unit 117 according to the embodiment.

Fig. 11 is a conceptual diagram for illustration of setting of attribute information of a node in relationship setting unit 117 according to the embodiment.

Fig. 12 is a diagram for illustration of integration of nodes according to the embodiment.

Fig. 13 is a diagram for schematic illustration of integration processing of a relationship synthesizing unit 116 according to the embodiment.

Fig. 14 is a diagram for illustration of a flow of the integration processing of relationship synthesizing unit 116 according to the embodiment.

Fig. 15 is a diagram for illustration of a specific example of a data causal model according to the embodiment.

Fig. 16 is a diagram for illustration of a specific example of an FTA causal model according to the embodiment.

Fig. 17 is a diagram for illustration of a specific example of the integration processing according to the embodiment.

Fig. 18 is a diagram for illustration of a use form using an integrated causal model according to the embodiment.

Fig. 19 is a diagram for illustration of another use form using the integrated causal model according to the embodiment.

Fig. 20 is a diagram for illustration of an editing screen 300 according to a modification of the embodiment.

Fig. 21 is a diagram for illustration of an editing screen 301 according to a modification of the embodiment.

Fig. 22 is a diagram for illustration of a variable list according to a modification of the embodiment.

DESCRIPTION OF EMBODIMENTS

An embodiment of the present invention will be described in detail with reference to the drawings. The same or corresponding parts in the drawings are denoted by the same reference numerals, and the descriptions thereof will not be repeated. Modifications described below may be appropriately and selectively combined.

Hereinafter, an embodiment of a process analysis device which is one form of an information processing device will be described with reference to the drawings.

<1. Application example>

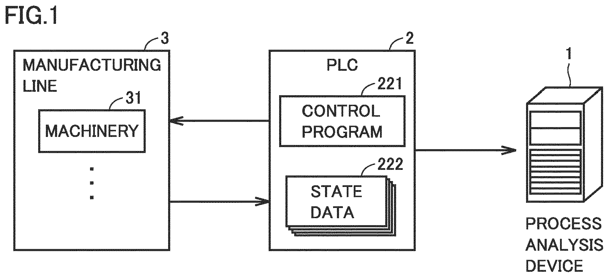

Fig. 1 is a diagram schematically illustrating an example of a use scene of a process analysis device 1 which is one form of an information processing device according to an embodiment. As illustrated in Fig. 1, process analysis device 1 according to the embodiment acquires a plurality of pieces of state data 222 and log data 223 related to states of a plurality of machineries 31 constituting a manufacturing line 3. Manufacturing line 3 only needs to be able to manufacture an object of some kind, and may be configured by a plurality of devices or may be configured by one device such as a packaging machine. In addition, each of machineries 31 only needs to be able to perform processing of some kind in a manufacturing process, and may be configured by one or a plurality of devices or may be configured by a part of a device. In a case where one of machineries 31 is configured as a part of one device, the plurality of machineries 31 may be configured by the one device. In addition, in a case where one device performs a plurality of processing, the device may be correspondingly regarded as different machineries 31. For example, when one device performs first processing and second processing, the device that performs the first processing may be regarded as first machinery 31, and the device that performs the second processing may be regarded as second machinery 31. Further, state data 222 may include all kinds of data related to a state of each of machineries 31 constituting manufacturing line 3.

In addition, process analysis device 1 according to the embodiment acquires a control program 221 for controlling an operation of manufacturing line 3. Control program 221 may include any type of program that controls an operation of each of machineries 31 constituting manufacturing line 3. Control program 221 may include one program or a plurality of programs. In the embodiment, the operation of manufacturing line 3 is controlled by a programmable logic controller (PLC) 2. Therefore, process analysis device 1 acquires a plurality of pieces of state data 222, log data 223, and control program 221 from PLC 2.

Next, process analysis device 1 according to the embodiment statistically analyzes the plurality of pieces of state data 222 that have been acquired to identify strength of a relationship between the plurality of machineries 31 in manufacturing line 3. The strength of the relationship is an example of the "connection state" of the present disclosure. Process analysis device 1 according to the embodiment analyzes acquired control program 221 and log data 223 that have been analysis to identify an order relationship of the plurality of machineries 31 in manufacturing line 3. Then, process analysis device 1 according to the embodiment identifies a causal relationship (first causal relationship) between the plurality of machineries 31 in a process executed in manufacturing line 3 based on the strength of the relationship and the order relationship that have been identified. In the embodiment, in the course of analyzing the causal relationship (first causal relationship) between the plurality of machineries 31, control program 221 is used to identify the order relationship between the plurality of machineries 31. Since control program 221 defines the operation of each of machineries 31, it is possible to more accurately identify the order relationship of each of machineries 31 by using control program 221.

Process analysis device 1 according to the embodiment acquires a causal relationship (second causal relationship) between a plurality of events related to the plurality of machineries 31 in a process performed on manufacturing line 3 according to user setting. Then, process analysis device 1 according to the embodiment generates a third causal relationship obtained by integrating the first causal relationship and the second causal relationship.

The second causal relationship corresponds to a causal relationship between a plurality of events based on a failure mechanism of the plurality of machineries 31 in the process performed on manufacturing line 3. For example, it corresponds to a fault tree analysis (FTA) created by experts as an example.

According to the embodiment, by generating the third causal relationship obtained by integrating the first causal relationship based on the data according to state data 222 and control program 221 with the second causal relationship such as FTA created by an expert, it is possible to perform accurate modeling of the causal relationship between the plurality of machineries 31 constituting the process performed on manufacturing line 3 with higher accuracy.

<2. Hardware configuration of process analysis device>

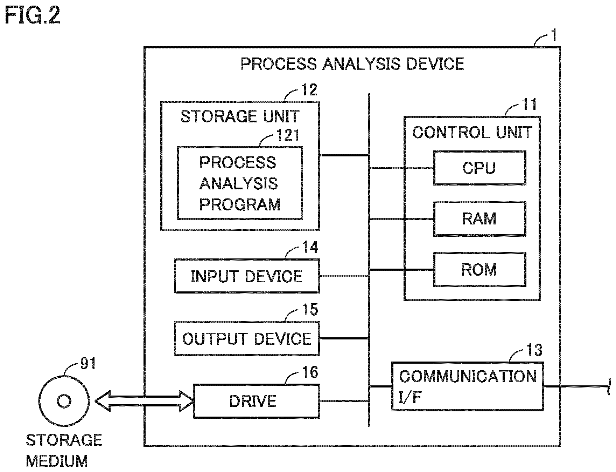

Fig. 2 is a diagram schematically illustrating an example of a hardware configuration of process analysis device 1 according to the embodiment. As illustrated in Fig. 2, process analysis device 1 according to the embodiment is a computer to which a control unit 11, a storage unit 12, a communication interface 13, an input device 14, an output device 15, and a drive 16 are electrically connected. In Fig. 2, the communication interface is referred to as "communication I/F".

Control unit 11 includes a central processing unit (CPU) that is a hardware processor, a random access memory (RAM), a read only memory (ROM), and the like, and controls each of the components according to information processing. Storage unit 12 is, for example, an auxiliary storage device such as a hard disk drive or a solid state drive, and stores a process analysis program 121 and the like executed by control unit 11.

Process analysis program 121 is a program for causing process analysis device 1 to execute a processing of analyzing the causal relationship between the plurality of machineries 31 in the manufacturing process performed on manufacturing line 3 using the plurality of pieces of state data 222, log data 223, and control program 221.

Communication interface 13 is, for example, a wired local area network (LAN) module, a wireless LAN module, or the like, and is an interface for performing wired or wireless communication via a network. Process analysis device 1 can perform data communication with PLC 2 via a network using communication interface 13. Note that a type of the network may be appropriately selected from, for example, the Internet, a wireless communication network, a mobile communication network, a telephone network, a dedicated network, and the like.

Input device 14 is, for example, a device for performing input, such as a mouse and a keyboard. Further, output device 15 is, for example, a device for performing output, such as a display and a speaker. An operator can operate process analysis device 1 via input device 14 and output device 15.

Drive 16 is, for example, a CD drive, a DVD drive, or the like, and is a drive device for reading a program stored in a storage medium 91. A type of drive 16 may be appropriately selected according to a type of storage medium 91. Process analysis program 121 may be stored in storage medium 91.

Storage medium 91 is a medium that accumulates information such as a program by electrical, magnetic, optical, mechanical, or chemical action so that a computer, other devices, a machine, or the like can read the information such as a program recorded therein. Process analysis device 1 may acquire process analysis program 121 from storage medium 91.

Here, in Fig. 2, a disk type storage medium such as a CD or a DVD is illustrated as an example of storage medium 91. However, the type of storage medium 91 is not limited to the disk type, and may be a type other than the disk type. Examples of the storage medium other than the disk type include a semiconductor memory such as a flash memory.

Note that, regarding a specific hardware configuration of process analysis device 1, components can be appropriately omitted, replaced, and added according to the embodiment. For example, control unit 11 may include a plurality of processors. Process analysis device 1 may be configured by a plurality of information processing devices. Furthermore, process analysis device 1 may be a general-purpose server device, a personal computer (PC), or the like, in addition to an information processing device designed exclusively for a service to be provided.

<3. PLC>

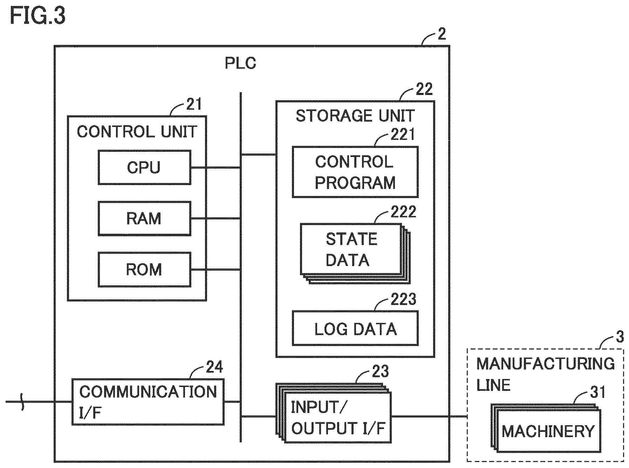

Fig. 3 is a diagram schematically illustrating an example of a hardware configuration of PLC 2 according to the embodiment. As illustrated in Fig. 3, PLC 2 is a computer to which a control unit 21, a storage unit 22, an input/output interface 23, and a communication interface 24 are electrically connected. With this, PLC 2 is configured to control the operation of each of machineries 31 of manufacturing line 3. In Fig. 3, the input/output interface and the communication interface are referred to as "input/output I/F" and a "communication I/F", respectively.

Control unit 21 includes a CPU, a RAM, a ROM, and the like, and is configured to execute various types of information processing on the basis of a program and data. Storage unit 22 includes, for example, a RAM, a ROM, and the like, and stores control program 221, state data 222, log data 223, and the like. Control program 221 is a program for controlling the operation of manufacturing line 3. State data 222 is data related to the state of each of machineries 31. Log data 223 is data indicating a log of the operation of manufacturing line 3.

Input/output interface 23 is an interface for connection to an external device, and is appropriately configured according to the external device to be connected. In the embodiment, PLC 2 is connected to manufacturing line 3 via input/output interface 23. Note that, in a case where different state data can be acquired for a single device, the single device of interest may be regarded as the plurality of machineries 31 or may be regarded as single machinery 31. Therefore, the number of input/output interfaces 23 may be the same as the number of machineries 31 constituting manufacturing line 3, or may be different from the number of machineries 31 constituting manufacturing line 3.

Communication interface 24 is, for example, a wired LAN module, a wireless LAN module, or the like, and is an interface for performing wired or wireless communication. PLC 2 can perform data communication with process analysis device 1 through communication interface 24.

Note that, regarding a specific hardware configuration of PLC 2, components can be appropriately omitted, replaced, and added according to the embodiment. For example, control unit 21 may include a plurality of processors. Storage unit 22 may include a RAM and a ROM included in control unit 21. Storage unit 22 may include an auxiliary storage device such as a hard disk drive or a solid state drive. In addition, PLC 2 may be replaced with a general-purpose desktop PC, a tablet PC, or the like according to an object to be controlled, in addition to an information processing device designed exclusively for a service to be provided.

<4. Software configuration of process analysis device>

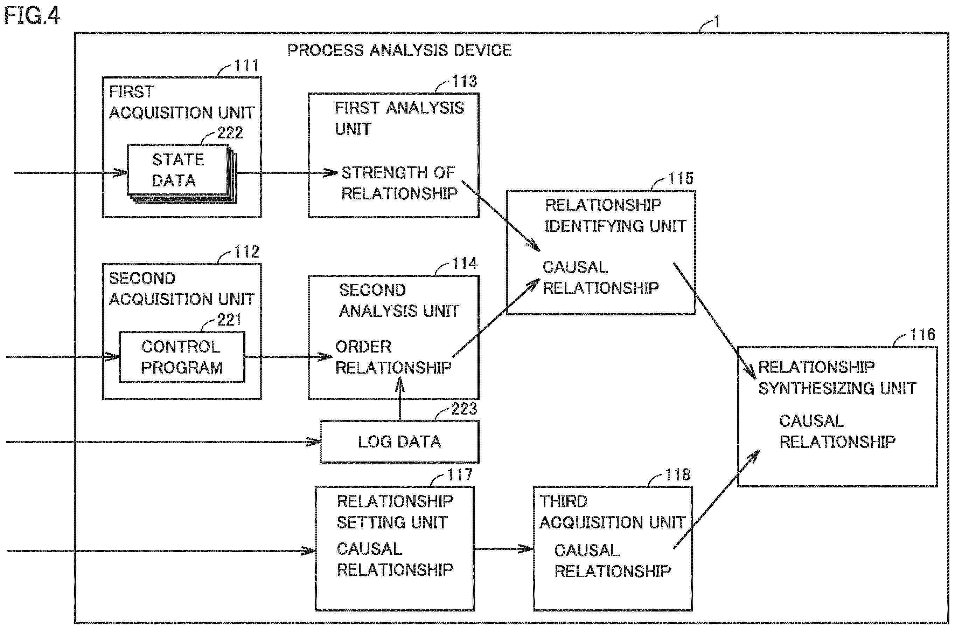

Fig. 4 is a diagram schematically illustrating an example of a software configuration of process analysis device 1 according to the embodiment. As illustrated in Fig. 4, control unit 11 of process analysis device 1 develops process analysis program 121 stored in storage unit 12 to the RAM. Then, control unit 11 interprets and executes process analysis program 121 developed in the RAM by the CPU to control each component. As a result, as illustrated in Fig. 4, process analysis device 1 according to the embodiment includes, as software modules, a first acquisition unit 111, a second acquisition unit 112, a first analysis unit 113, a second analysis unit 114, a relationship identifying unit 115, a relationship synthesizing unit 116, a relationship setting unit 117, and a third acquisition unit 118.

First acquisition unit 111 acquires a plurality of pieces of state data 222 related to the states of the plurality of machineries 31 constituting manufacturing line 3. Second acquisition unit 112 acquires control program 221 for controlling the operation of manufacturing line 3. First analysis unit 113 statistically analyzes the plurality of pieces of state data 222 that have been acquired to identify the strength of the relationship between the plurality of machineries 31. Second analysis unit 114 analyzes control program 221 that has been acquired to identify the order relationship of the plurality of machineries 31. In the embodiment, second analysis unit 114 identifies the order relationship of the plurality of machineries 31 using log data 223 obtained by executing control program 221. Then, relationship identifying unit 115 identifies a causal relationship (first causal relationship) between the plurality of machineries 31 in the process performed in manufacturing line 3 based on the strength of the relationship and the order relationship that have been identified.

Relationship setting unit 117 sets a causal relationship (second causal relationship) between a plurality of events related to the plurality of machineries 31 in the process performed in manufacturing line 3 according to the user setting.

Third acquisition unit 118 acquires the causal relationship (second causal relationship) between the plurality of events related to the plurality of machineries in the process performed in manufacturing line 3 according to the user setting set by relationship setting unit 117.
relationship synthesizing unit 116 synthesizes a third causal relationship obtained by integrating the first causal relationship and the second causal relationship.

In the present example, a configuration in a case where the second causal relationship is set using relationship setting unit 117 in process analysis device 1 is described, but relationship setting unit 117 is not necessarily included in process analysis device 1. That is, any configuration may be used as long as third acquisition unit 118 can acquire the set second causal relationship.

Each software module of process analysis device 1 will be described in detail in an operation example to be described later. In the embodiment, an example in which each software module of process analysis device 1 is realized by a general-purpose CPU is described. However, some or all of the above software modules may be realized by one or a plurality of dedicated hardware processors. Furthermore, regarding the software configuration of process analysis device 1, omission, replacement, and addition of software modules may be appropriately performed according to the embodiment.

<5.1 First causal relationship>

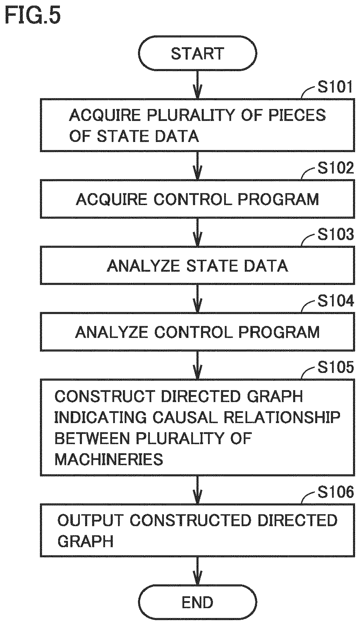

Fig. 5 is a flowchart showing an example of a processing procedure of process analysis device 1 according to the embodiment. However, the processing procedure described below is merely an example, and each processing may be changed as much as possible. In addition, with respect to the processing procedure described below, steps can be appropriately omitted, replaced, and added according to the embodiment.

First, in step S101, control unit 11 operates as first acquisition unit 111, and acquires the plurality of pieces of state data 222 related to the state of each of machineries 31 from PLC 2. Each of machineries 31 may include, for example, a device such as a conveyor, a robot arm, a servomotor, a cylinder (molding machine or the like), a suction pad, a cutter device, or a sealing device, or a part of these devices. Furthermore, each of machineries 31 may be, for example, a composite device such as a printing machine, a mounting machine, a reflow furnace, or a substrate inspection device. Furthermore, each of machineries 31 may include, in addition to the device with a physical operation of some kind as described above, a device that performs internal processing, such as a device that detects information of some kind by various sensors, a device that acquires data from the various sensors, a device that detects information of some kind from the acquired data, a device that performs information processing on the acquired data, and the like, for example. As a specific example, in a manufacturing line including an optical sensor that detects a mark provided on an object carried on a conveyor, a device that uses the optical sensor and information detected by the optical sensor may be handled as each of machineries 31. In addition, each of the pieces of state data 222 may be, for example, data indicating at least one of torque, speed, acceleration, temperature, current, voltage, air pressure, pressure, flow rate, position, dimension (height, length, width), and area. Such state data 222 can be obtained by a measurement device such as a known sensor or a camera. For example, the flow rate can be obtained by a float sensor. In addition, the position, the dimensions, and the area can be obtained by an image sensor.

Note that state data 222 may include data obtained from one or a plurality of measurement devices. In addition, state data 222 may be data obtained from the measurement device as it is, or may be data that can be obtained by applying some processing to data obtained from the measurement device, such as position data obtained from image data. Each of the pieces of state data 222 is acquired corresponding to each of machineries 31.

Each measuring device is appropriately arranged so as to be able to monitor each of machineries 31 of manufacturing line 3. PLC 2 operates manufacturing line 3 to collect the pieces of state data 222 respectively from the measuring devices. Control unit 11 acquires, from PLC 2, state data 222 regarding the state of each of machineries 31 when manufacturing line 3 is normally operated. As a result, control unit 11 can acquire the plurality of pieces of state data 222. When the acquisition of the plurality of pieces of state data 222 is completed, control unit 11 advances the processing to next step S102.

In next step S102, control unit 11 operates as second acquisition unit 112 and acquires control program 221 from PLC 2. For example, control program 221 may be described, so as to be executable by PLC 2, using at least one of ladder diagram language, function block diagram language, structured text language, instruction list language, sequential function chart language, and C language. When the acquisition of control program 221 is completed, control unit 11 advances the processing to next step S103. Note that step S102 may be executed in parallel with step S101 described above, or may be executed before step S101 described above.

In next step S103, control unit 11 operates as first analysis unit 113, and statistically analyzes the plurality of pieces of state data 222 acquired in step S101 to identify the strength of the relationship between the plurality of machineries 31 on manufacturing line 3. When the analysis processing of the plurality of pieces of state data 222 is completed, control unit 11 advances the processing to next step S104. Note that step S103 may be executed at any timing as long as it is executed after step S101 described above. For example, step S103 may be executed before step S102.

In the following description, for convenience of description, it is assumed that manufacturing line 3 includes four machineries (for example, four servomotors) F1 to F4 as the plurality of machineries 31, and control unit 11 acquires state data 222 of each of machineries F1 to F4 in step S101.

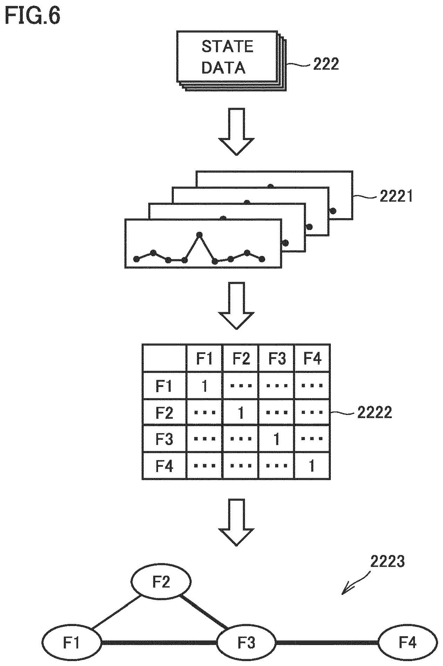

Fig. 6 is a diagram for schematic illustration of the operation of first analysis unit 113. As illustrated in Fig. 6, control unit 11 calculates a feature amount 2221 from each piece of state data 222 acquired in step S101. A type of feature amount 2221 is not particularly limited, and may be appropriately selected according to the embodiment. Furthermore, a method of calculating feature amount 2221 can be appropriately determined according to the embodiment.

As a specific example, in the embodiment, control unit 11 calculates feature amount 2221 from state data 222 by the following method. First, control unit 11 divides state data 222 that has been acquired for each frame in order to define a processing range for calculating feature amount 2221. A length of each frame may be appropriately set according to the embodiment.

For example, control unit 11 may divide each piece of state data 222 for each frame having a certain time length.

Next, control unit 11 calculates a value of feature amount 2221 from each frame of state data 222. In a case where state data 222 is continuous value data such as measurement data, control unit 11 may calculate an amplitude, a maximum value, a minimum value, an average value, a variance value, a standard deviation, an instantaneous value (one point sample), and the like in the frame as feature amount 2221, for example. Furthermore, in a case where state data 222 is discrete value data such as detection data and the like, control unit 11 may calculate "on" time, "off" time, a duty ratio, the number of times of "on", the number of times of "off", and the like in each frame as feature amount 2221, for example. As a result, when the calculation of each feature amount 2221 is completed, control unit 11 calculates a correlation coefficient or a partial correlation coefficient between feature amounts 2221. The correlation coefficient can be calculated by the following Mathematical formula 1. In addition, the partial correlation coefficient can be calculated by the following Mathematical formula 2.

[Mathematical formula 1]

$$r_{ij} = \frac{\sum_{k=1}^{n}(x_i(k) - X_i)(x_j(k) - X_j)}{\sqrt{(\sum_{k=1}^{n}(x_i(k) - X_i)^2)(\sum_{k=1}^{n}(x_j(k) - X_j)^2)}}$$

Note that $r_{ij}$ represents an element in an i-th row and a j-th column of a matrix 2222. Further, $x_i$ and $x_j$ correspond to data indicating feature amount 2221 calculated from each piece of state data 222. $X_i$ and $X_j$ represent sample means of $x_i$ and $x_j$, respectively. The number of feature amounts 2221 used for calculation of the correlation is represented by n.

[Mathematical formula 2]

$$r_{ij \cdot rest} = \frac{-r^{ij}}{\sqrt{r^{ii}r^{jj}}}$$

Note that an inverse matrix of a matrix R ($r_{ij}$) is expressed as R$^{-1}$($r_{ij}$), and $r_{ij}$ indicates an element of the i-th row and the j-th column of the inverse matrix of matrix 2222.

As a result, control unit 11 can obtain matrix 2222 having the correlation coefficient or the partial correlation coefficient as each element. The correlation coefficient and the partial correlation coefficient between respective feature amounts 2221 indicate the strength of the relationship between corresponding machineries 31. That is, the strength of the relationship between corresponding machineries 31 is identified by each element of matrix 2222. When the calculation of the correlation coefficient or the partial correlation coefficient between feature amounts 2221 is completed, control unit 11 constructs an undirected graph information 2223 indicating the strength of the relationship between corresponding machineries 31 on the basis of the correlation coefficient or the partial correlation coefficient between feature amounts 2221.

For example, control unit 11 creates a node corresponding to each of machineries 31. Then, in a case where a value of the correlation coefficient or the partial correlation coefficient calculated between two machineries 31 is greater than or equal to a threshold value, control unit 11 connects both corresponding nodes by an edge. On the other hand, in a case where the value of the correlation coefficient or the partial correlation coefficient calculated between two machineries 31 is less than the threshold value, control unit 11 does not connect both corresponding nodes by an edge. The threshold may be a fixed value defined in process analysis program 121, or may be a set value that can be changed by the operator or the like. Furthermore, a thickness of the edge may be determined according to a magnitude of the value of the corresponding correlation coefficient or partial correlation coefficient.

As a result, undirected graph information 2223 as illustrated can be created. In the example, four nodes corresponding to the four machineries F1 to F4 are created. An edge is formed between the nodes of machineries F1 and F2, between the nodes of machineries F1 and F3, between the nodes of machineries F2 and F3, and between the nodes of machineries F3 and F4. In addition, corresponding to the fact that the correlation between machineries F1 and F3 and between machineries F3 and F4 is larger than the correlation between other machineries, the edges between the nodes of machineries F1 and F3 and between the nodes of machineries F3 and F4 are provided to be thicker than other edges. As described above, when the construction of undirected graph information 2223 indicating the strength of the relationship between the plurality of machineries 31 is completed, the analysis processing of state data 222 according to the embodiment is completed, and control unit 11 advances the processing to next step S104.

Note that, in the example, undirected graph information 2223 represents an undirected graph that has been formed by an image. However, an output format of undirected graph information 2223 is not limited to the image, and may be expressed by text or the like. Furthermore, in the above example, by comparing the correlation coefficient or the partial correlation coefficient with the threshold value, an edge is not formed between nodes (machineries 31) having a weak relationship. However, the method of removing edges between nodes having weak relationships is not limited to such an example. For example, after forming a graph in which all nodes are connected by edges, control unit 11 may delete edges in the formed graph in order from an edge having a smaller correlation coefficient or partial correlation coefficient so that a fit index (GFI, SRMR, etc.) representing a degree of deviation does not exceed a threshold value.

Returning to Fig. 5, in next step S104, control unit 11 operates as second analysis unit 114, and analyzes control program 221 acquired in step S102 to identify the order relationship of the plurality of machineries 31 in manufacturing line 3. In the embodiment, control unit 11 identifies the order relationship of the plurality of machineries 31 based on log data 223 obtained by operating manufacturing line 3 using control program 221. When the analysis processing of control program 221 is completed, control unit 11 advances the processing to next step S105. Note that step S104 may be executed at any timing as long as it is executed after step S102 described above. For example, when step S102 is executed before step S101, step S104 may be executed before step S101.

Processing of analyzing control program 221 will be described in detail. In the following description, for convenience of description, similarly to the above description, it is assumed that manufacturing line 3 includes four machineries F1 to F4 as the plurality of machineries 31, and in step S102, control unit 11 acquires control program 221 in which variables v1 to v4 corresponding to four machineries F1 to F4 are used.

Control unit 11 acquires log data 223 indicating an execution result when manufacturing line 3 is normally operated using control program 221 from PLC 2. For example, PLC 2 may create log data 223 indicating the execution result of control program 221 when collecting state data 222. In this case, a time stamp, a value of a used variable, and the like are recorded in log data 223. In addition, for example, control program 221 may be provided with a debug mode for collecting information such as a frequency of execution of each code line, a code line that has been executed, calculation time consumed by each section of the code, and the like. In this case, PLC 2 can create log data 223 in which each piece of information is recorded by executing control program 221 in the debug mode. Control unit 11 may acquire log data 223 created in this way from PLC 2. When the acquisition of log data 223 is completed, control unit 11 refers to log data 223 that has been acquired and orders the variables (v1 to v4) to identify the order relationship of machineries 31 in manufacturing line 3.

As described above, when the identification of the order relationship of the plurality of machineries 31 is completed, the analysis processing of control program 221 according to the embodiment is completed, and control unit 11 advances the processing to next step S105.

Returning to Fig. 5, in next step S105, control unit 11 operates as relationship identifying unit 115. That is, control unit 11 identifies the causal relationship between the plurality of machineries 31 in the process performed in manufacturing line 3 on the basis of the strength and order relationship of the relationship between the plurality of machineries 31 in manufacturing line 3 identified in steps S103 and S104.

In the embodiment, control unit 11 creates a directed graph information indicating the causal relationship between machineries 31 by applying the identified order relationship of machineries 31 to undirected graph information 2223 that has been constructed.

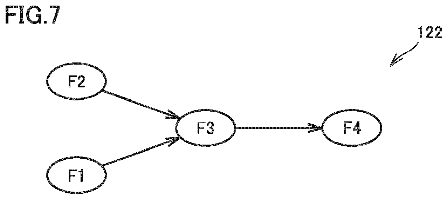

Fig. 7 is a diagram illustrating an example of the directed graph information that has been created according to the embodiment. In a directed graph 122 of Fig. 7, the following causal relationships (a) to (d) are shown.

(a) Among machineries "F1" to "F4", machinery "F1" or "F2" is used first.
(b) Machinery "F3" is used after machineries "F1" and "F2".
(c) Machinery "F4" is used after machinery "F3".
(d) Among machineries "F1" to "F4", machinery "F4" is used last.

Furthermore, a thickness of each edge in directed graph 122 is set corresponding to the thickness of each edge in undirected graph information 2223. As described above, when the creation of the directed graph information is completed, control unit 11 advances the processing to next step S106.

Note that, in the example of Fig. 7, the directed graph information represents a directed graph (directed graph 122) by an image. However, an output format of the directed graph information is not limited to the image, and may be expressed by text or the like. In the above example, the strength of the relationship between the nodes (machinery 31) is expressed by the thickness of the edge. However, the method of expressing the strength of the relationship between the nodes may not be limited to such an example. The strength of the relationship between the nodes may be expressed by adding a number to the vicinity of each edge.

In next step S106, control unit 11 outputs the directed graph information (first causal relationship) created in step S105. Specifically, relationship identifying unit 115 outputs valid graph information indicating the generated causal relationship to relationship synthesizing unit 116. As described above, control unit 11 ends the processing of generating the first causal relationship according to the present operation example.

As described above, in the embodiment, the order relationship between the plurality of machineries 31 in manufacturing line 3 is identified by analyzing control program 221 in step S104. Then, by applying the order relationship identified from control program 221 to the undirected graph information indicating the strength of the relation derived from state data 222 in step S103, directed graph information indicating the causal relationship between the plurality of machineries 31 in the process performed in manufacturing line 3 is created. Here, control program 221 defines the operation of each of machineries 31. Therefore, in the course of analyzing the causal relationship among the plurality of machineries 31, the order relationship among the plurality of machineries 31 can be appropriately identified by using control program 221. Therefore, according to the embodiment, it is possible to perform accurate modeling of the causal relationship between the plurality of machineries 31 constituting manufacturing line 3.

<5.2 Second causal relationship>

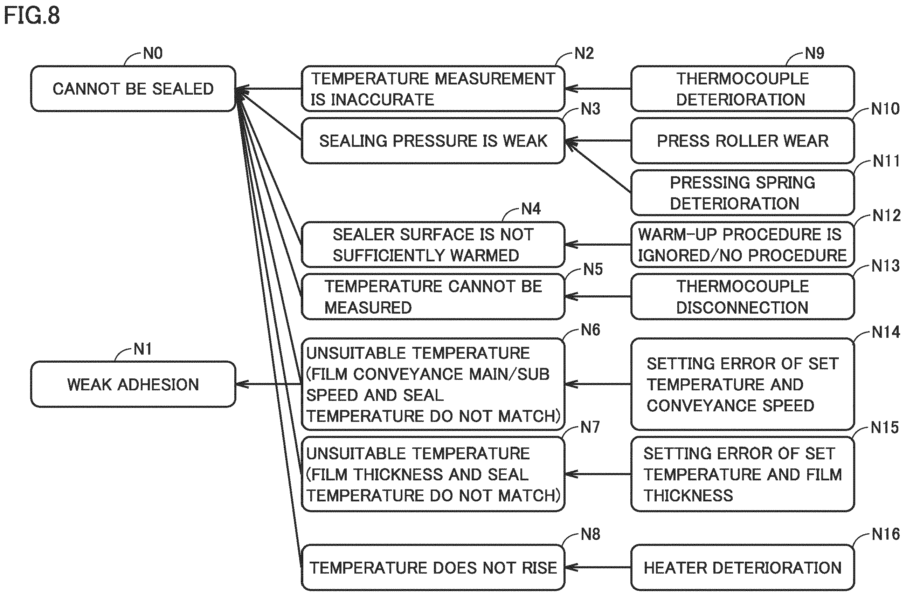

Fig. 8 is a diagram for illustration of FTA according to an embodiment. Fig. 8 illustrates, as an example, a fault tree analysis (FTA) created by an expert for manufacturing line 3 of a packaging machine. FTA corresponds to effective graph information indicating a causal relationship between a plurality of events occurring in manufacturing line 3 of the packaging machine.

Specifically, each event is illustrated in the form of a node, and nodes N0 to N15 (also collectively referred to as node N) are provided. Node N0 ("cannot be sealed") and node N1 ("weak adhesion") corresponding to final two events are provided. Then, nodes N2 to N8 corresponding to other events before N0 and N1 are provided on the basis of the causal relationship.

For node N0, node N2 ("temperature measurement is inaccurate"), node N3 ("sealing pressure is weak"), node N4 ("sealer surface is not sufficiently warmed"), node N5 ("temperature cannot be measured"), node N6 ("unsuitable temperature (film conveyance main/sub speed and seal temperature does not match)"), node N7 ("unsuitable temperature (film thickness and seal temperature does not match)"), and node N8 ("seal temperature does not rise") are provided as causally related events.

For node N1, node N6 ("unsuitable temperature (film conveyance main/sub speed and seal temperature does not match)") is provided.

Then, nodes N9 to N15 corresponding to other events before nodes N2 to N8 are provided on the basis of the causal relationship.

Node N9 ("thermocouple deterioration") is provided for node N2. Node N10 ("press roller wear") and node N11 ("pressing spring deterioration") are provided for node N3. Node N11 ("warm-up procedure is ignored/no procedure") is provided for node N4. Node N12 ("thermocouple disconnection") is provided for node N5. Node N13 ("setting error of set temperature and conveyance speed") is provided for node N6. Node N14 ("setting error of set temperature and film thickness") is provided for node N7. Node N15 ("heater deterioration") is provided for node N8.

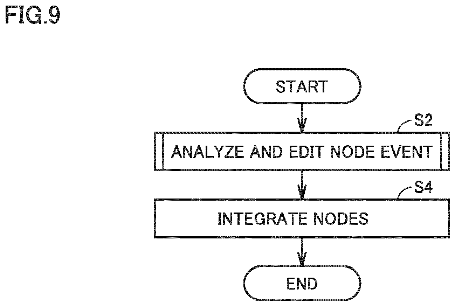

Fig. 9 is a diagram for illustration of a flow of correcting FTA according to the embodiment. The processing in Fig. 9 is processing in relationship setting unit 117. Relationship setting unit 117 analyzes and edits a node event (step S2). Relationship setting unit 117 has a user interface that receives an input from the user, and may execute processing on the basis of the user input as necessary.

Next, relationship setting unit 117 integrates nodes that have been edited (step S4).

Then, the processing ends (end).

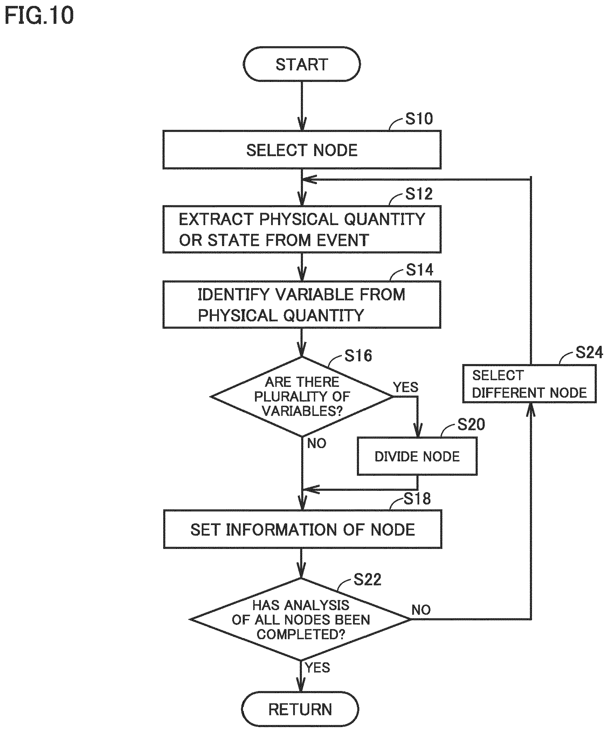

Fig. 10 is a flowchart for illustration of a subroutine of processing of analyzing and editing a node event in relationship setting unit 117 according to the embodiment. Referring to Fig. 10, relationship setting unit 117 selects a node (step S10). For example, one of the nodes (N0) described in Fig. 8 is selected. Next, relationship setting unit 117 extracts a physical quantity or a state from the corresponding event of the selected node (step S12).

For example, relationship setting unit 117 extracts a physical quantity ("seal adhesion strength") on the basis of an event that "cannot be sealed" at node N0. Similarly, relationship setting unit 117 extracts a physical quantity ("seal adhesion strength") based on an event of "weak adhesion" of node N1. In extraction of a physical quantity or a state for the event, a physical quantity/state correspondence table in which a physical quantity or a state is associated with an event is provided in advance, and the physical quantity or the state is extracted with reference to the physical quantity/state correspondence table. Note that, in a case where there is no physical quantity or state corresponding to the physical quantity/state correspondence table, the user may perform input via the user interface. Note that the physical quantity/state correspondence table may be updated as needed by input by the user via the user interface. Note that the event does not need to be associated with the physical quantity or state on a one-to-one basis, and the physical quantity or state may be extracted based on a degree of relevance related to the event.

Next, relationship setting unit 117 identifies a variable from the extracted physical quantity or state (step S14). For example, relationship setting unit 117 identifies a variable ("CurrentTemperature CenterSeal") from a physical quantity ("seal temperature"). In identifying the variable from the extracted physical quantity or state, a variable correspondence table in which a variable is associated with the physical quantity or state is provided in advance, and the variable is identified with reference to the variable correspondence table. Note that, in a case where there is no corresponding variable in the variable correspondence table, the user may perform input via the user interface. A method of input by the user via the user interface will be described later.

Note that the variable correspondence table may be updated as needed by input by the user via the user interface.

Next, relationship setting unit 117 determines whether or not a plurality of variables are identified from the extracted physical quantity or state (step S16).

When it is determined in step S16 that a plurality of variables are not identified (NO in step S16), relationship setting unit 117 sets attribute information of the node (step S18).

On the other hand, when it is determined in step S16 that a plurality of variables are identified (YES in step S16), relationship setting unit 117 divides the node (step S20). Next, the processing proceeds to step S18, where the attribute information of the node is set.

Next, relationship setting unit 117 determines whether or not analysis of all the nodes has been completed (step S22).

In step S22, when relationship setting unit 117 determines that the analysis of all the nodes has been completed (YES in step S22), the processing ends (return).

On the other hand, in step S22, when relationship setting unit 117 determines that the analysis of all the nodes is not completed (NO in step S22), the processing proceeds to step S24.

In step S24, relationship setting unit 117 selects another node. Then, returning to step S12, the above processing is repeated.

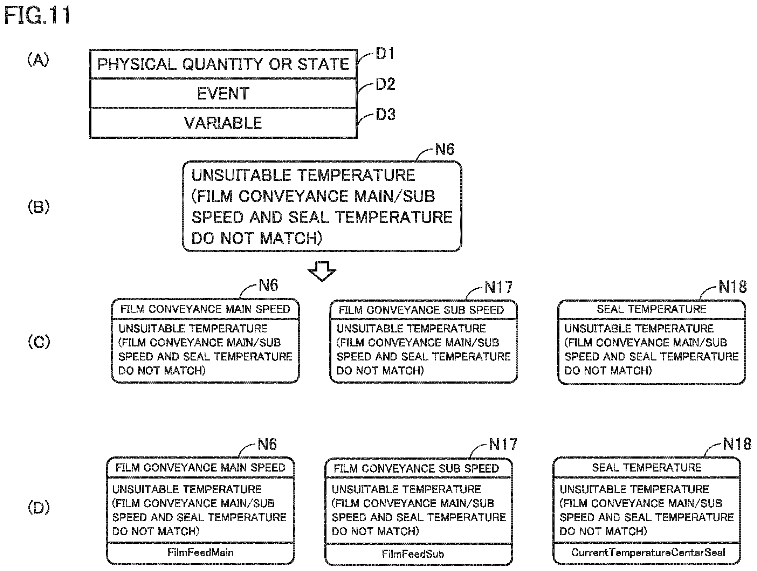

Fig. 11 is a conceptual diagram for illustration of setting of attribute information of a node in relationship setting unit 117 according to the embodiment. Referring to Fig. 11(A), a data structure of attribute information provided corresponding to each node is illustrated. As an example, data D1 to D3 having a three-layer structure are provided as the attribute information corresponding to each node. In this example, information on the extracted physical quantity or state is set in data D1 of a first layer as the attribute information corresponding to each node. Event information is set in data D2 in a second layer. A variable is set to data D3 of a third layer. Note that the data structure is an example, and may be in any order.

Referring to Fig. 11(B), a case where physical quantities ("film conveyance main/sub speed and seal temperature") are extracted for node N6 is illustrated.

Fig. 11(C) illustrates a case where it is determined that a plurality of variables have been identified because there are different variables for the physical quantity ("film conveyance main speed"), the physical quantity ("film conveyance sub speed"), and the physical quantity ("seal temperature") for node N7. This example shows a case where a variable ("FilmFeedMain") is identified for the physical quantity ("film conveyance main speed"), a variable ("FilmFeedSub") is identified for the physical quantity ("film conveyance sub speed"), and a variable ("CurrentTemperature CenterSeal") is identified for the physical quantity ("seal temperature").

Therefore, in this case, the node is divided. A case where nodes N16 and N17 are provided as divided nodes is illustrated.

Fig. 11(D) illustrates a case where attribute information is set in each of nodes N6, N16, and N17. Specifically, data D1 ("film conveyance main speed"), data D2 ("unsuitable temperature"), and data D3 ("FilmFeedMain") are set as attribute information corresponding to node N6. Data D1 ("film conveyance sub speed") and data D3 ("FilmFeedSub") are set as attribute information corresponding to node N16. Data D 1 ("seal temperature"), data D2 ("unsuitable temperature"), and data D3 ("CurrentTemperature CenterSeal") are set as attribute information corresponding to node N17.

The above processing is sequentially executed for each node.

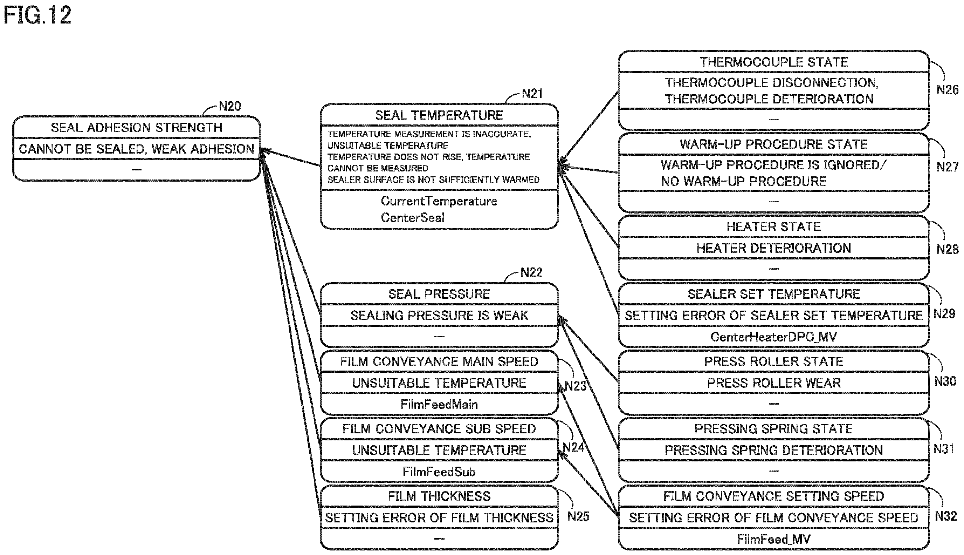

Fig. 12 is a diagram for illustration of integration of nodes according to the embodiment. Referring to Fig. 12, a diagram for illustration of a case where edited nodes are integrated is shown.

There are various integration methods, and as an example, integration is performed on the basis of information of the physical quantity or the state included in the attribute information corresponding to each node N. That is, if the physical quantity or the state information included in the attribute information corresponding to each node N is the same, the nodes are integrated. For example, node N0 and node N1 in Fig. 8 are provided as an integrated node N20 since the same physical quantity ("seal adhesion strength") is extracted. Data D1 ("seal adhesion strength"), data D2 ("cannot be sealed, weak adhesion"), and data D3 ("none") are set as the attribute information of node N20. In addition, edge information (arrow information) of the causal relationship is also integrated.

Similarly, integrated nodes N21 to N32 are provided. In a case where the nodes are integrated, the attribute information of the nodes is set such that data D1 and data D3 are common, but data D2 is set with information added.

Data D1 ("seal temperature"), data D2 ("measurement is inaccurate, temperature does not rise, unsuitable temperature, temperature cannot be measured"), and data D3 ("CurrentTemperature CenterSeal") are set as the attribute information of node N21.

Data D1 ("seal pressure"), data D2 ("sealing pressure is weak"), and data D3 ("none") are set as the attribute information of node N22.

Data D1 ("film conveyance main speed"), data D2 ("unsuitable temperature"), and data D3 ("FilmFeedMain") are set as the attribute information of node N23.

Data D1 ("film conveyance sub speed"), data D2 ("unsuitable temperature"), and data D3 ("FilmFeedSub") are set as the attribute information of node N24.

Data D1 ("film thickness"), data D2 ("unsuitable temperature"), and data D3 ("absent") are set as the attribute information of node N25.

Data D1 ("thermocouple state"), data D2 ("disconnection, deterioration"), and data D3 ("none") are set as the attribute information of node N26.

Data D1 ("warm-up procedure state"), data D2 ("ignore, no procedure"), and data D3 ("none") are set as the attribute information of node N27.

Data D1 ("heater state"), data D2 ("deterioration"), and data D3 ("none") are set as the attribute information of node N28.

Data D1 ("sealer set temperature"), data D2 ("setting error"), and data D3 ("CenterHeaterDPC_MV") are set as the attribute information of node N29.

Data D1 ("press roller state"), data D2 ("press roller wear"), and data D3 ("none") are set as the attribute information of node N30.

Data D1 ("pressing spring state"), data D2 ("pressing spring deterioration"), and data D3 ("none") are set as the attribute information of node N31.

Data D1 ("film conveyance speed setting"), data D2 ("setting error"), and data D3 ("FilmFeed_MV") are set as the attribute information of node N31.

Through the above processing, nodes N21 to N25 are provided as nodes having a causal relationship with node N20. In addition, nodes N26 to N29 are provided as nodes having a causal relationship with node N21. Nodes N30 and N31 are provided as nodes having a causal relationship with node N22. In node N23, node N32 is provided as a node having a causal relationship.

Control unit 11 outputs valid graph information (second causal relationship) corrected based on valid graph information of FTA. Specifically, relationship setting unit 117 sets the valid graph information (second causal relationship) indicating the causal relationship between the plurality of events related to the plurality of machineries 31 in the process performed on manufacturing line 3 according to the user setting. Third acquisition unit 118 acquires the valid graph information (second causal relationship) indicating the causal relationship between the plurality of events from relationship setting unit 117, and outputs the valid graph information to relationship synthesizing unit 116.

<5.3 Integration processing>

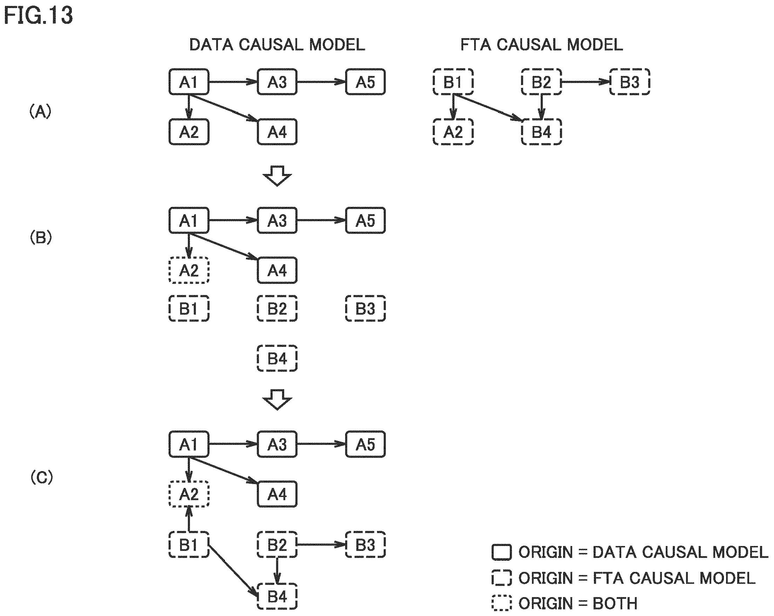

Fig. 13 is a diagram for schematic illustration of integration processing of relationship synthesizing unit 116 according to the embodiment. Referring to Fig. 13(A), in the present example, the valid graph information (first causal relationship) output from relationship identifying unit 115 and the valid graph information (second causal relationship) output from third acquisition unit 118 are illustrated as an example. In the present example, the valid graph information (first causal relationship) output from relationship identifying unit 115 is also referred to as data causal model, and the valid graph information (second causal relationship) output from third acquisition unit 118 is also referred to as FTA causal model.

In order to simplify the description, the data causal model is provided with nodes A1 to A5. The FTA causal model is provided with nodes B1 to B4 and a node A2.

Referring to Fig. 13(B), the nodes of the FTA causal model are added to the nodes of the data causal model. In addition, nodes having the same variable are grouped into one node. Here, a case where node A2 is grouped into one node is illustrated.

Referring to Fig. 13(C), a case where edge information of the FTA causal model is added to the data causal model to which the nodes of the FTA causal model are added is illustrated. This makes it possible to integrate the data causal model and the FTA causal model.

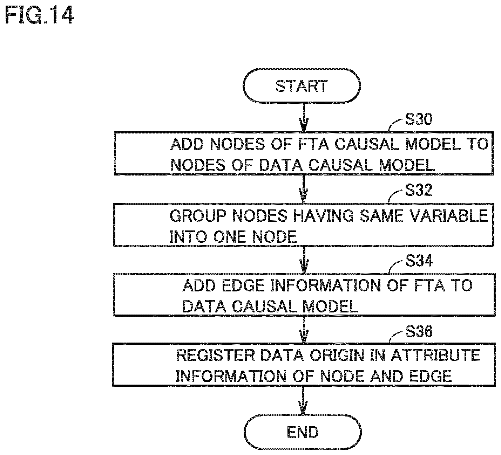

Fig. 14 is a diagram for illustration of a flow of integration processing of relationship synthesizing unit 116 according to the embodiment. Referring to Fig. 14, relationship synthesizing unit 116 adds the nodes of the FTA causal model to the nodes of the data causal model (step S30). Next, relationship synthesizing unit 116 groups the nodes having the same variable into one node (step S32). Next, relationship synthesizing unit 116 adds the edge information of the FTA causal model to the data causal model to which the nodes of the FTA causal model are added (step S34).

Next, relationship synthesizing unit 116 registers data origin information in the attribute information of the node and the edge (step S36). Specifically, data origin information indicating an origin of the data causal model, an origin of the FTA causal model, or both origins is registered.

Then, relationship synthesizing unit 116 ends the processing (end).

<6. Specific example>

Hereinafter, the integration processing will be described using a specific example of the data causal model.

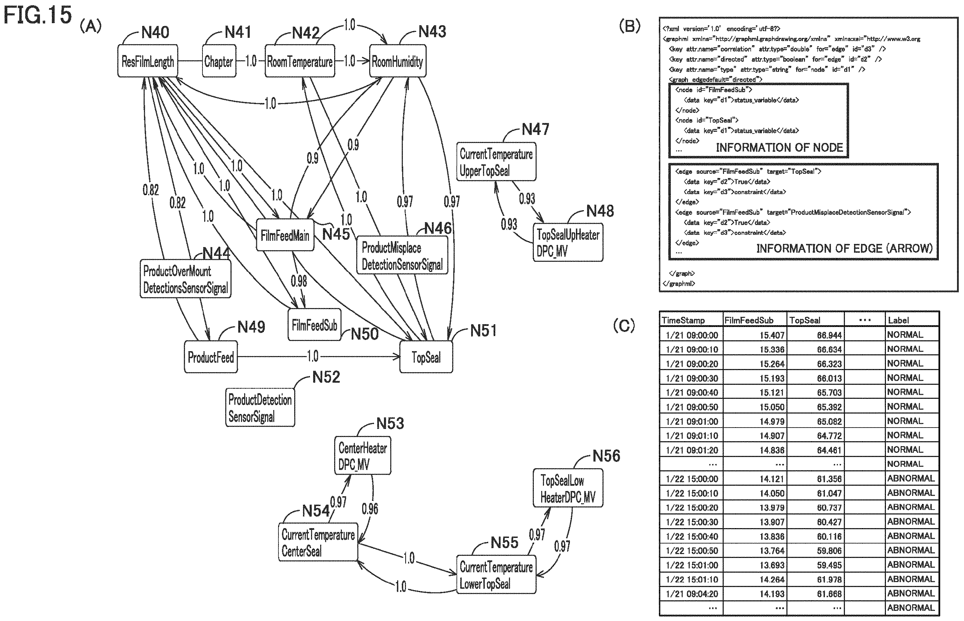

Fig. 15 is a diagram for illustration of a specific example of the data causal model according to the embodiment.

Referring to Fig. 15(A), as an example, the data causal model identified based on the strength of the relationship between the plurality of machineries 31 with respect to manufacturing line 3 of the packaging machine and the order relationship of the plurality of machineries 31 obtained by analyzing control program 221 is illustrated.

Specifically, nodes N40 to N56 are provided, and the strength of the relationship between the nodes is indicated by a numeric value together with the edge information between the nodes. A variable used in control program 221 is associated with each node N.

Fig. 15(B) illustrates an example of graph structure data of the data causal model. As illustrated in Fig. 15(B), in the graph structure data, the edge information between the nodes is described together with information on each node. As an example, a case where a variable is assigned as an example of attribute information of a node (node ID) is illustrated. Note that the graph structure data is an example, and is not limited to the description.

Fig. 15(C) illustrates the log data of each node as an example of time-series data.

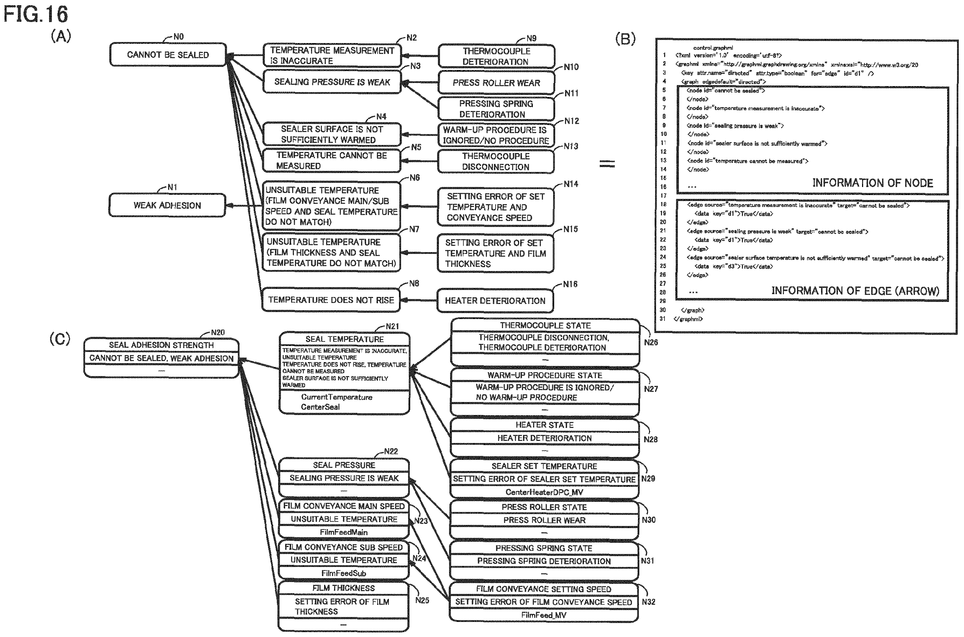

Fig. 16 is a diagram for illustration of a specific example of the FTA causal model according to the embodiment.

Referring to Fig. 16(A), the FTA causal model described in Fig. 8 is shown here.

Fig. 16(B) illustrates an example of the graph structure data of the FTA causal model. In the graph structure data, the edge information between the nodes is described together with information on each node. As an example, a case where an event is assigned as an example of attribute information of a node (node ID) is illustrated. Note that the graph structure data is an example, and is not limited to the description.

Relationship setting unit 117 generates, based on the graph structure data of FTA, graph structure data of the FTA causal model that has been corrected illustrated in Fig. 16(C) according to the flow described above.

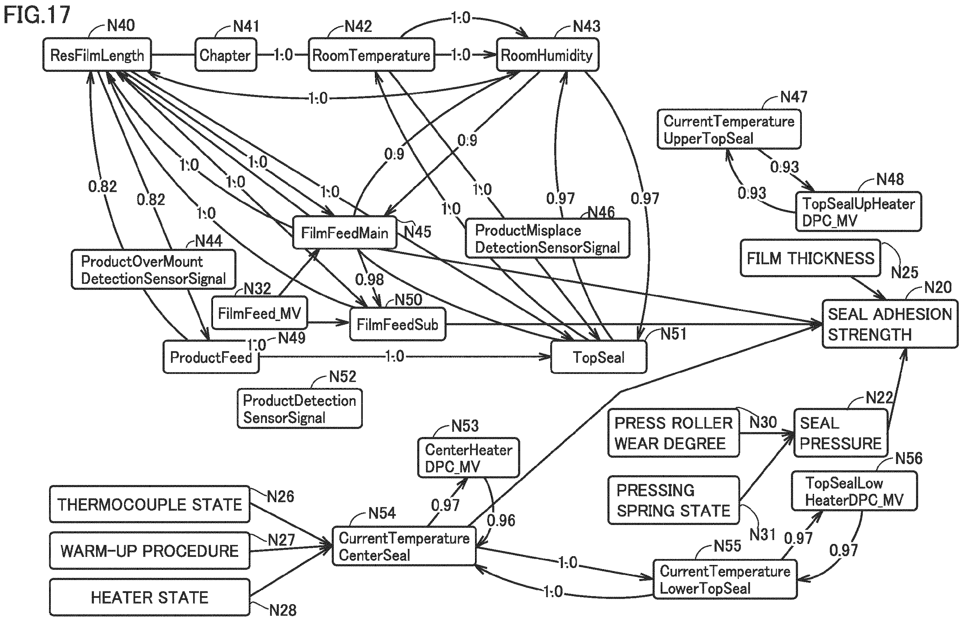

Fig. 17 is a diagram for illustration of a specific example of the integration processing according to the embodiment. Referring to Fig. 17, a case is illustrated in which, according to the flow described in Fig. 14, the nodes of the FTA causal model are added to the nodes of the data causal model, and the edge information of the FTA causal model is added to the data causal model obtained by adding the nodes of the FTA causal model.

As described above, a case where nodes having the same variable are grouped into one node is illustrated.

Specifically, the variable ("CurrentTemperature CenterSeal") included in the attribute information of node N21 described with reference to Fig. 12 is the same as that of node N54, and thus grouped into one. Since the variable ("FilmFeedMain") included in the attribute information of node N23 is the same as that of node N45, and thus grouped into one. Since the variable ("FilmFeedSub") included in the attribute information of node N24 is the same as that of node N50, and thus grouped into one. Since ("CenterHeaterDPCMV") included in the attribute information of node N29 is the same as that of node N53, and thus grouped into one. Since there is no variable identical to the variable ("FilmFeed_MV") included in the attribute information of node N32, this variable is newly added.

With this processing, relationship synthesizing unit 116 can generate an integrated causal model (third causal relationship) in which the data causal model and the FTA causal model are integrated.

<7. Use form>

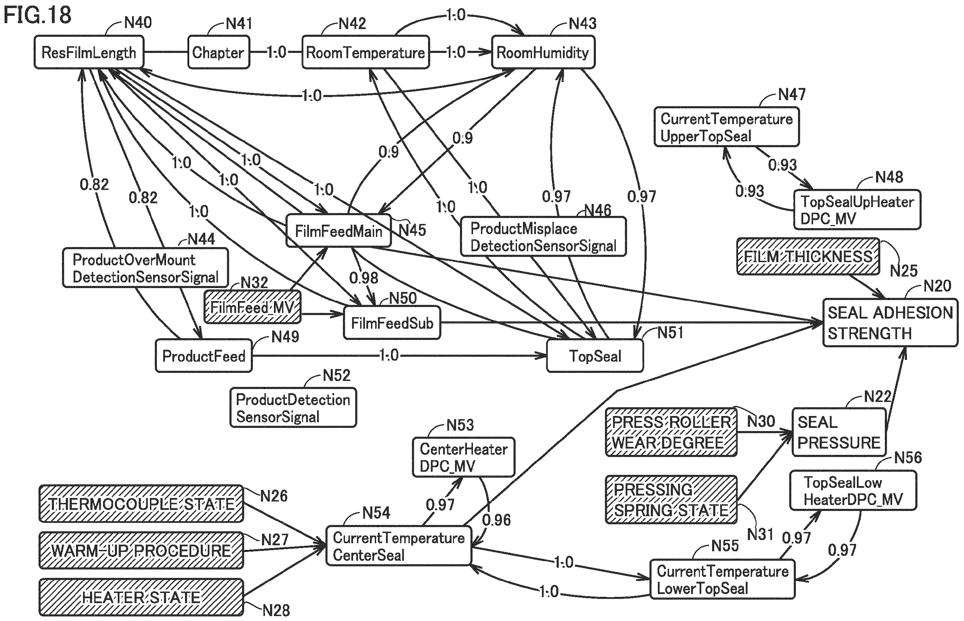

Fig. 18 is a diagram for illustration of a use form using the integrated causal model according to the embodiment.

Referring to Fig. 18, a case where there is an abnormality in the seal adhesion strength will be considered as an example. The node at the end of the edge is extracted by using the integrated causal model. In this example, nodes N25 to N28 and N30 to N32 are extracted.

Therefore, by displaying information of the extracted node, the user can easily estimate a cause of the abnormality on the basis of the information of the node. That is, by using the integrated causal model according to the present embodiment, a phenomenon that cannot be sensed as data can also be incorporated into the causal model, and the cause of the abnormality can be easily identified.

Still another use form will be described.

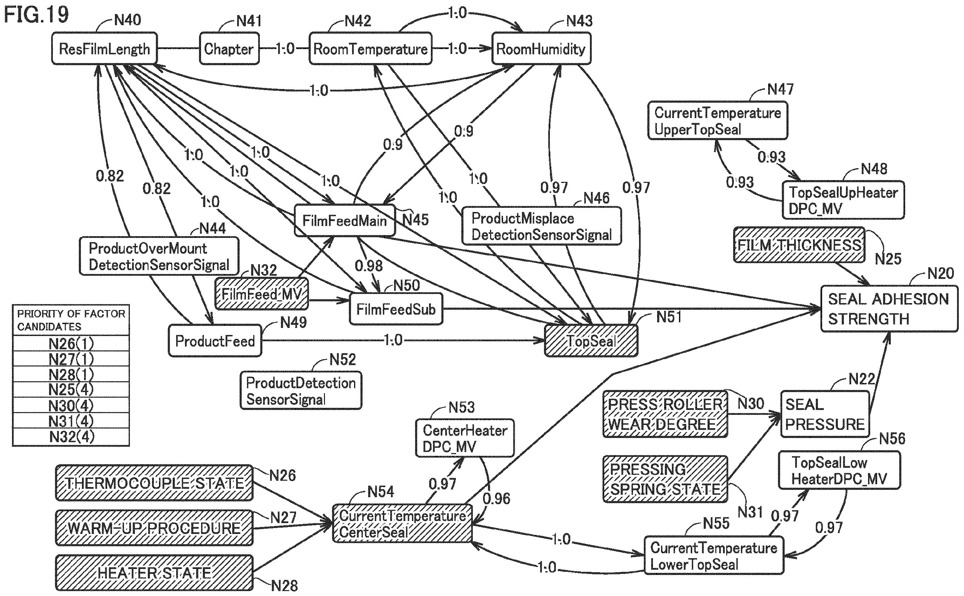

Fig. 19 is a diagram for illustration of another use form using the integrated causal model according to the embodiment.

Referring to Fig. 19, a case where there is an abnormality in the seal adhesion strength will be considered as an example.

In the present example, control unit 11 further uses the state data in the normal state and the state data in the abnormal state. Control unit 11 calculates a feature amount based on the state data in the normal state and a feature amount based on the state data in the abnormal state, and analyzes a difference (deviation degree) between the feature amounts. Control unit 11 may identify a node whose deviation degree that has been analyzed is large in the integrated causal model, and present a node having a higher priority as a factor candidate to the user.

In this example, as an example, a case where node N51 (variable "TopSeal") and node N54 (variable "CurrentTemperature CenterSeal") are identified as nodes whose deviation degree is large is illustrated.

Among nodes N25 to N28 and N30 to N32 at the end of the edge extracted in Fig. 18, the nodes related to node N51 or N54 are nodes N26 to N28.

Therefore, nodes N26 to N28 may be presented to the user in a table format as nodes with higher priority as the factor candidates. Then, nodes N25 and N30 to N32 may be presented as nodes with the next highest priority. As an example, the order of priority is indicated in parentheses. Note that it is not limited to the table format, and can be presented in various formats. For example, it may be displayed in a blinking manner or in a colored manner.

<8. Modification>

In a modification of the embodiment, an editing function capable of editing the causal relationship according to a user's input will be described. Relationship setting unit 117 may have an editing function capable of editing the causal relationship.

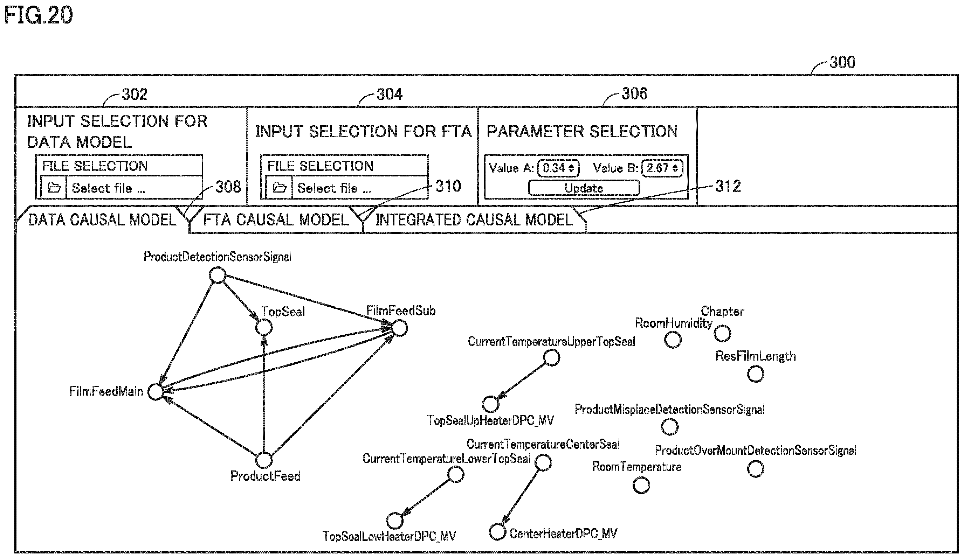

Fig. 20 is a diagram for illustration of an editing screen 300 according to the modification of the embodiment. Referring to Fig. 20, editing screen 300 is provided to be editable according to the user's input for each of the data causal model, the FTA causal model, and the integrated causal model.

Specifically, editing screen 300 is provided with an input selection item for data causal model 302, an input selection item for FTA causal model 304, a parameter selection item 306, and a display area for displaying each model. Each model is provided switchably by a tab. In this example, selecting a tab 308 displays the data causal model. Specifically, the data causal model corresponding to a file selected in input selection item for data causal model 302 is displayed. Selecting a tab 310 displays the FTA causal model. Specifically, the FTA causal model corresponding to a file selected in input selection item for FTA causal model 304 is displayed. Selecting a tab 312 displays the integrated causal model. Specifically, the integrated causal model obtained by integrating the data causal model displayed on tab 308 and the FTA causal model displayed on tab 310 is displayed.

In this example, as an example, a plurality of nodes N of the data causal model are displayed. For example, each node can be edited by operating a mouse, a keyboard, or the like included in input device 14. For example, a node position may be adjusted, and addition, editing, and deletion of nodes, edges, and attribute information can be performed. Furthermore, for example, the parameter of the strength of the relationship between the nodes may be adjusted by using parameter selection item 306.

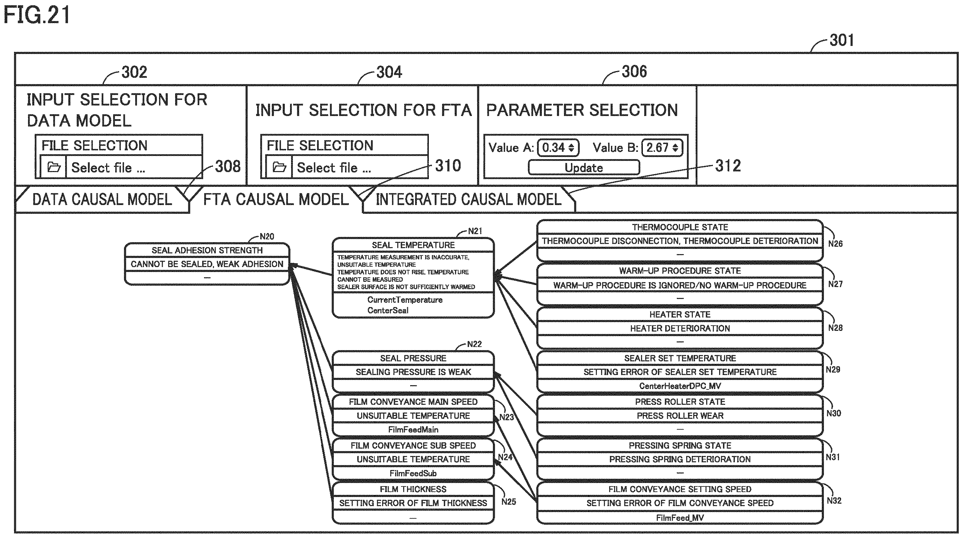

Fig. 21 is a diagram for illustration of an editing screen 301 according to the modification of the embodiment. Referring to Fig. 21, editing screen 301 illustrates a case where tab 310 is selected as compared with editing screen 300. In this example, the FTA causal model is displayed.

In this example, as an example, a plurality of nodes N of the FTA causal model are displayed. For example, each node can be edited by operating a mouse, a keyboard, or the like included in input device 14. For example, a node position may be adjusted, and addition, editing, and deletion of nodes, edges, and attribute information can be performed. Furthermore, for example, the parameter of the strength of the relationship between the nodes may be adjusted by using parameter selection item 306.

The user may correct FTA using editing screen 301.

Specifically, the user may set the attribute information of each node as described above using editing screen 301. For example, when a variable is identified from a physical quantity or a state, a list of the variable correspondence table may be displayed on editing screen 301, and the user may set related variable while viewing the list.

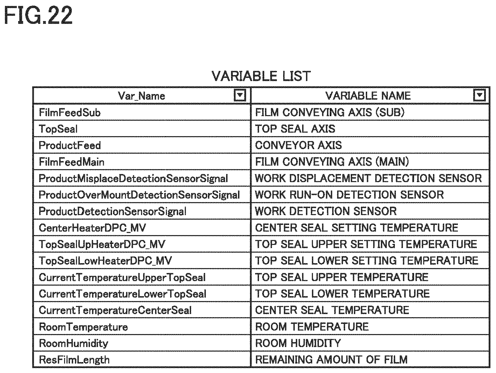

Fig. 22 is a diagram for illustration of a variable list according to a modification of the embodiment. Referring to Fig. 22, a variable list in which a plurality of variables and descriptions thereof are described is provided. The variable list can use a variable obtained by analyzing control program 221. Furthermore, the order of the list to be presented to the user may be dynamically changed.

Relationship setting unit 117 changes the order of the variable list to be presented to the user on editing screen 301. Specifically, relationship setting unit 117 may receive a designation input of a node by the user, and preferentially list related variables on the basis of information of a physical quantity or a state included in attribute information of the node. The user may set and input a corresponding variable from the list.

For example, in the case where a physical quantity ("seal temperature") included in the attribute information of the node, the order of the list may be changed such that variables related to the seal temperature are shown at the top of the list. As a result, the user can easily set the variable of the attribute information of the node.

Note that, in the above description, for example, in a case where the user identifies a variable from a physical quantity or a state by using editing screen 301, a case where the user displays a variable list on editing screen 301 and the user sets a related variable while viewing the list has been described. This can also be applied to the identification of a physical quantity or a state. For example, the user may display the physical quantity/state list on editing screen 301, and the user may set the related physical quantity or state while viewing the list.

<9. Supplementary note>

As described above, the present embodiment includes the following disclosure.

(Configuration 1)

An information processing device comprising:

a relationship identifying unit (115) configured to identify a first causal relationship based on data of a connection state and an order relationship of a plurality of machineries (31) that constitute a manufacturing line (3), the first causal relationship being between the plurality of machineries in a process performed on the manufacturing line;
a relationship acquiring unit (118) configured to acquire a second causal relationship between a plurality of events related to the plurality of machineries in a process performed on the manufacturing line according to user setting; and
a relationship synthesizing unit (116) configured to generate a third causal relationship obtained by integrating the first causal relationship and the second causal relationship.

(Configuration 2)

The information processing device according to claim 1, wherein

the first causal relationship includes a plurality of first nodes provided respectively for a plurality of variables set for the plurality of machineries, and first edge information indicating a connection between the plurality of first nodes, and
the second causal relationship includes a plurality of second nodes provided respectively for the plurality of events, and second edge information indicating a connection between the plurality of second nodes.

(Configuration 3)

The information processing device according to claim 2, wherein

each of the second nodes is provided so as to be able to set attribute information including a variable related to an event, and
the relationship synthesizing unit:

determines whether or not there is a first node corresponding to a variable identical to the variable set in the attribute information of each of the second nodes;
puts the second node together with the corresponding first node, when it is determined that there is a first node corresponding to the identical variable; and
generate the third causal relationship based on the first and the second edge information.

(Configuration 4)

The information processing device according to claim 2, further comprising a relationship setting unit (117) configured to set the second causal relationship according to user setting.

(Configuration 5)

The information processing device according to claim 4, wherein

the relationship setting unit has a setting screen (400, 401) capable of accepting setting of attribute information including a variable related to an event corresponding to each of the second nodes, and
the setting screen displays a list selection screen of the plurality of variables used in a program for controlling the plurality of machineries, and

updates a listing order of the plurality of variables in the list selection screen according to user selection.

(Configuration 6)

The information processing device according to claim 1, wherein
the second causal relationship corresponds to a causal relationship between a plurality of events based on a failure mechanism of the plurality of machineries in the process performed on the manufacturing line.

(Configuration 7)

An information processing method comprising:

identifying a first causal relationship based on data of a connection state and an order relationship of a plurality of machineries that constitute a manufacturing line, the first causal relationship being between the plurality of machineries in a process performed on the manufacturing line;
acquiring a second causal relationship between a plurality of events related to the plurality of machineries in a process performed on the manufacturing line according to user setting; and
generating a third causal relationship obtained by integrating the first causal relationship and the second causal relationship.

(Configuration 8)

An information processing program that causes a computer to execute the steps comprising:

identifying a first causal relationship based on data of a connection state and an order relationship of a plurality of machineries that constitute a manufacturing line, the first causal relationship being between the plurality of machineries in a process performed on the manufacturing line;
acquiring a second causal relationship between a plurality of events related to the plurality of machineries in a process performed on the manufacturing line according to user setting; and
generating a third causal relationship obtained by integrating the first causal relationship and the second causal relationship.

Although the embodiment of the present disclosure has been described, the embodiment disclosed herein should be considered to be illustrative in all respects and not restrictive. The scope of the present disclosure is defined by the claims, and is intended to include meanings equivalent to the claims and all modifications within the scope.

REFERENCE SIGNS LIST

1: process analysis device, 3: manufacturing line, 11, 21: control unit, 12, 22: storage unit, 13, 24: communication interface, 14: input device, 15: output device, 16: drive, 23: input/output interface, 31: machinery, 91: storage medium, 111: first acquisition unit, 112: second acquisition unit, 113: first analysis unit, 114: second analysis unit, 115: relationship identifying unit, 116: relationship synthesizing unit, 117: relationship setting unit, 118: third acquisition unit, 121: process analysis program, 221: control program, 222: state data, 223: log data, 300, 301: editing screen, 302: input selection item for data causal model, 304: input selection item for casual model, 306: parameter selection item, 308, 310, 312: tab

**Claims**

1. An information processing device comprising:

a relationship identifying unit configured to identify a first causal relationship based on data of a connection state and an order relationship of a plurality of machineries that constitute a manufacturing line, the first causal relationship being between the plurality of machineries in a process performed on the manufacturing line;
a relationship acquiring unit configured to acquire a second causal relationship between a plurality of events related to the plurality of machineries in a process performed on the manufacturing line according to user setting; and
a relationship synthesizing unit configured to generate a third causal relationship obtained by integrating the first causal relationship and the second causal relationship.

2. The information processing device according to claim 1, wherein

the first causal relationship includes a plurality of first nodes provided respectively for a plurality of variables set for the plurality of machineries, and first edge information indicating a connection between the plurality of first nodes, and

the second causal relationship includes a plurality of second nodes provided respectively for the plurality of events, and second edge information indicating a connection between the plurality of second nodes.

3. The information processing device according to claim 2, wherein

each of the second nodes is provided so as to be able to set attribute information including a variable related to an event, and

the relationship synthesizing unit:

determines whether or not there is a first node corresponding to a variable identical to the variable set in the attribute information of each of the second nodes;

puts the second node together with the corresponding first node, when it is determined that there is a first node corresponding to the identical variable; and

generate the third causal relationship based on the first and the second edge information.

4. The information processing device according to claim 2, further comprising a relationship setting unit configured to set the second causal relationship according to user setting.

5. The information processing device according to claim 4, wherein

the relationship setting unit has a setting screen capable of accepting setting of attribute information including a variable related to an event corresponding to each of the second nodes, and

the setting screen displays a list selection screen of the plurality of variables used in a program for controlling the plurality of machineries, and

updates a listing order of the plurality of variables in the list selection screen according to user selection.

6. The information processing device according to claim 1, wherein the second causal relationship corresponds to a causal relationship between a plurality of events based on a failure mechanism of the plurality of machineries in the process performed on the manufacturing line.

7. An information processing method comprising:

identifying a first causal relationship based on data of a connection state and an order relationship of a plurality of machineries that constitute a manufacturing line, the first causal relationship being between the plurality of machineries in a process performed on the manufacturing line;

acquiring a second causal relationship between a plurality of events related to the plurality of machineries in a process performed on the manufacturing line according to user setting; and

generating a third causal relationship obtained by integrating the first causal relationship and the second causal relationship.

8. An information processing program that causes a computer to execute the steps comprising:

identifying a first causal relationship based on data of a connection state and an order relationship of a plurality of machineries that constitute a manufacturing line, the first causal relationship being between the plurality of machineries in a process performed on the manufacturing line;

acquiring a second causal relationship between a plurality of events related to the plurality of machineries in a process performed on the manufacturing line according to user setting; and

generating a third causal relationship obtained by integrating the first causal relationship and the second causal relationship.

FIG.1

FIG.2

FIG.3

# FIG.4

PROCESS ANALYSIS DEVICE

1

**111 FIRST ACQUISITION UNIT**
222 STATE DATA

**113 FIRST ANALYSIS UNIT**
STRENGTH OF RELATIONSHIP

**115 RELATIONSHIP IDENTIFYING UNIT**
CAUSAL RELATIONSHIP

**112 SECOND ACQUISITION UNIT**
221 CONTROL PROGRAM

**114 SECOND ANALYSIS UNIT**
ORDER RELATIONSHIP

**116 RELATIONSHIP SYNTHESIZING UNIT**
CAUSAL RELATIONSHIP

223 LOG DATA

**117 RELATIONSHIP SETTING UNIT**
CAUSAL RELATIONSHIP

**118 THIRD ACQUISITION UNIT**
CAUSAL RELATIONSHIP

EP 4 307 061 A1

FIG.5

```
        ┌─────────────┐
        │    START    │
        └─────────────┘
               │                    S101
               ▼
  ┌──────────────────────────────┐
  │ ACQUIRE PLURALITY OF PIECES  │
  │ OF STATE DATA                │
  └──────────────────────────────┘
               │                    S102
               ▼
  ┌──────────────────────────────┐
  │  ACQUIRE CONTROL PROGRAM     │
  └──────────────────────────────┘
               │                    S103
               ▼
  ┌──────────────────────────────┐
  │    ANALYZE STATE DATA        │
  └──────────────────────────────┘
               │                    S104
               ▼
  ┌──────────────────────────────┐
  │  ANALYZE CONTROL PROGRAM     │
  └──────────────────────────────┘
               │                    S105
               ▼
  ┌──────────────────────────────┐
  │ CONSTRUCT DIRECTED GRAPH     │
  │ INDICATING CAUSAL RELATIONSHIP│
  │ BETWEEN PLURALITY OF         │
  │ MACHINERIES                  │
  └──────────────────────────────┘
               │                    S106
               ▼
  ┌──────────────────────────────┐
  │ OUTPUT CONSTRUCTED DIRECTED  │
  │ GRAPH                        │
  └──────────────────────────────┘
               │
               ▼
        ┌─────────────┐
        │     END     │
        └─────────────┘
```

FIG.6

| | F1 | F2 | F3 | F4 |
|---|---|---|---|---|
| F1 | 1 | ... | ... | ... |
| F2 | ... | 1 | ... | ... |
| F3 | ... | ... | 1 | ... |
| F4 | ... | ... | ... | 1 |

FIG.7

122

FIG.8

FIG.9

```
                    ┌─────────────┐
                    │    START    │
                    └──────┬──────┘
                           │
                           ▼               ╭S2
       ┌───────────────────────────────────┐
       ║   ANALYZE AND EDIT NODE EVENT      ║
       └───────────────────────────────────┘
                           │
                           ▼               ╭S4
       ┌───────────────────────────────────┐
       │         INTEGRATE NODES           │
       └───────────────────────────────────┘
                           │
                           ▼
                    ┌─────────────┐
                    │     END     │
                    └─────────────┘
```

FIG.10

```
                    ┌──────────┐
                    │  START   │
                    └────┬─────┘
                         │
                         ▼        ⌐S10
         ┌───────────────────────────────┐
         │         SELECT NODE           │
         └───────────────┬───────────────┘
                         │◄────────────────────────────────┐
                         ▼        ⌐S12                      │
         ┌───────────────────────────────┐                 │
         │   EXTRACT PHYSICAL QUANTITY    │                 │
         │     OR STATE FROM EVENT        │                 │
         └───────────────┬───────────────┘                 │
                         ▼        ⌐S14                      │
         ┌───────────────────────────────┐                 │
         │     IDENTIFY VARIABLE FROM     │                 │
         │      PHYSICAL QUANTITY         │                 │
         └───────────────┬───────────────┘                 │
                         ▼       ⌐S16                       │
                    ◇ ARE THERE ◇                     ⌐S24  │
                   ◇ PLURALITY OF ◇  YES   ┌──────────────┐ │
                   ◇ VARIABLES?  ◇────────►│   SELECT     │ │
                    ◇          ◇           │ DIFFERENT NODE│─┤
                         │ NO              └──────────────┘ │
                         │       ⌐S20            ▲          │
                         │   ┌──────────────┐    │          │
                         │   │ DIVIDE NODE  │────┘          │
                         │   └──────────────┘               │
                         ▼◄──────┐   ⌐S18                   │
         ┌───────────────────────────────┐                 │
         │     SET INFORMATION OF NODE    │                 │
         └───────────────┬───────────────┘                 │
                         ▼        ⌐S22                      │
                    ◇ HAS ANALYSIS ◇      NO                │
                   ◇ OF ALL NODES BEEN ◇───────────────────┘
                   ◇  COMPLETED?   ◇
                         │ YES
                         ▼
                    ┌──────────┐
                    │  RETURN  │
                    └──────────┘
```

# FIG.11

(A)

| PHYSICAL QUANTITY OR STATE | ⌐D1 |
|---|---|
| EVENT | ⌐D2 |
| VARIABLE | ⌐D3 |

(B)

⌐N6

UNSUITABLE TEMPERATURE
(FILM CONVEYANCE MAIN/SUB
SPEED AND SEAL TEMPERATURE
DO NOT MATCH)

⇩

(C)

⌐N6

| FILM CONVEYANCE MAIN SPEED |
|---|
| UNSUITABLE TEMPERATURE (FILM CONVEYANCE MAIN/SUB SPEED AND SEAL TEMPERATURE DO NOT MATCH) |

⌐N17

| FILM CONVEYANCE SUB SPEED |
|---|
| UNSUITABLE TEMPERATURE (FILM CONVEYANCE MAIN/SUB SPEED AND SEAL TEMPERATURE DO NOT MATCH) |

⌐N18

| SEAL TEMPERATURE |
|---|
| UNSUITABLE TEMPERATURE (FILM CONVEYANCE MAIN/SUB SPEED AND SEAL TEMPERATURE DO NOT MATCH) |

(D)

⌐N6

| FILM CONVEYANCE MAIN SPEED |
|---|
| UNSUITABLE TEMPERATURE (FILM CONVEYANCE MAIN/SUB SPEED AND SEAL TEMPERATURE DO NOT MATCH) |
| FilmFeedMain |

⌐N17

| FILM CONVEYANCE SUB SPEED |
|---|
| UNSUITABLE TEMPERATURE (FILM CONVEYANCE MAIN/SUB SPEED AND SEAL TEMPERATURE DO NOT MATCH) |
| FilmFeedSub |

⌐N18

| SEAL TEMPERATURE |
|---|
| UNSUITABLE TEMPERATURE (FILM CONVEYANCE MAIN/SUB SPEED AND SEAL TEMPERATURE DO NOT MATCH) |
| CurrentTemperatureCenterSeal |

EP 4 307 061 A1

FIG.12

**N20 — SEAL ADHESION STRENGTH**
CANNOT BE SEALED, WEAK ADHESION
—

**N21 — SEAL TEMPERATURE**
TEMPERATURE MEASUREMENT IS INACCURATE, UNSUITABLE TEMPERATURE
TEMPERATURE DOES NOT RISE, TEMPERATURE CANNOT BE MEASURED
SEALER SURFACE IS NOT SUFFICIENTLY WARMED

CurrentTemperature
CenterSeal

**N22 — SEAL PRESSURE**
SEALING PRESSURE IS WEAK
—

**N23 — FILM CONVEYANCE MAIN SPEED**
UNSUITABLE TEMPERATURE
FilmFeedMain

**N24 — FILM CONVEYANCE SUB SPEED**
UNSUITABLE TEMPERATURE
FilmFeedSub

**N25 — FILM THICKNESS**
SETTING ERROR OF FILM THICKNESS
—

**N26 — THERMOCOUPLE STATE**
THERMOCOUPLE DISCONNECTION, THERMOCOUPLE DETERIORATION
—

**N27 — WARM-UP PROCEDURE STATE**
WARM-UP PROCEDURE IS IGNORED/ NO WARM-UP PROCEDURE
—

**N28 — HEATER STATE**
HEATER DETERIORATION
—

**N29 — SEALER SET TEMPERATURE**
SETTING ERROR OF SEALER SET TEMPERATURE
CenterHeaterDPC_MV

**N30 — PRESS ROLLER STATE**
PRESS ROLLER WEAR
—

**N31 — PRESSING SPRING STATE**
PRESSING SPRING DETERIORATION
—

**N32 — FILM CONVEYANCE SETTING SPEED**
SETTING ERROR OF FILM CONVEYANCE SPEED
FilmFeed_MV

EP 4 307 061 A1

FIG.13

DATA CAUSAL MODEL          FTA CAUSAL MODEL

(A)

(B)

(C)

ORIGIN = DATA CAUSAL MODEL
ORIGIN = FTA CAUSAL MODEL
ORIGIN = BOTH

FIG.14

```
          ┌─────────┐
          │  START  │
          └────┬────┘
               │         S30
   ┌───────────▼──────────────────┐
   │ ADD NODES OF FTA CAUSAL MODEL TO│
   │ NODES OF DATA CAUSAL MODEL    │
   └───────────┬──────────────────┘
               │         S32
   ┌───────────▼──────────────────┐
   │ GROUP NODES HAVING SAME VARIABLE│
   │ INTO ONE NODE                 │
   └───────────┬──────────────────┘
               │         S34
   ┌───────────▼──────────────────┐
   │ ADD EDGE INFORMATION OF FTA TO│
   │ DATA CAUSAL MODEL             │
   └───────────┬──────────────────┘
               │         S36
   ┌───────────▼──────────────────┐
   │ REGISTER DATA ORIGIN IN ATTRIBUTE│
   │ INFORMATION OF NODE AND EDGE  │
   └───────────┬──────────────────┘
               │
          ┌────▼────┐
          │   END   │
          └─────────┘
```

**FIG.15** (A)

N40 ResFilmLength
N41 Chapter
N42 RoomTemperature
N43 RoomHumidity
N44 ProductOverMount DetectionsSensorSignal
N45 FilmFeedMain
N46 ProductMisplace DetectionSensorSignal
N47 CurrentTemperature UpperTopSeal
N48 TopSealUpHeater DPC_MV
N49 ProductFeed
N50 FilmFeedSub
N51 TopSeal
N52 ProductDetection SensorSignal
N53 CenterHeater DPC_MV
N54 CurrentTemperature CenterSeal
N55 CurrentTemperature LowerTopSeal
N56 TopSealLow HeaterDPC_MV

(B)

```
<?xml version='1.0' encoding='utf-8'?>
<graphml xmlns="http://graphml.graphdrawing.org/xmlns" xmlns:xsi="http://www.w3.org
  <key attr.name="correlation" attr.type="double" for="edge" id="d3" />
  <key attr.name="directed" attr.type="boolean" for="edge" id="d2" />
  <key attr.name="type" attr.type="string" for="node" id="d1" />
  <graph edgedefault="directed">
    <node id="FilmFeedSub">
      <data key="d1">status_variable</data>
    </node>
    <node id="TopSeal">
      <data key="d1">status_variable</data>
    </node>
    ...            INFORMATION OF NODE

    <edge source="FilmFeedSub" target="TopSeal">
      <data key="d2">True</data>
      <data key="d3">constraint</data>
    </edge>
    <edge source="FilmFeedSub" target="ProductMisplaceDetectionSensorSignal">
      <data key="d2">True</data>
      <data key="d3">constraint</data>
    </edge>
    ...          INFORMATION OF EDGE (ARROW)

  </graph>
</graphml>
```

(C)

| TimeStamp | FilmFeedSub | TopSeal | ... | Label |
|---|---|---|---|---|
| 1/21 09:00:00 | 15.407 | 66.944 | | NORMAL |
| 1/21 09:00:10 | 15.336 | 66.634 | | NORMAL |
| 1/21 09:00:20 | 15.264 | 66.323 | | NORMAL |
| 1/21 09:00:30 | 15.193 | 66.013 | | NORMAL |
| 1/21 09:00:40 | 15.121 | 65.703 | | NORMAL |
| 1/21 09:00:50 | 15.050 | 65.392 | | NORMAL |
| 1/21 09:01:00 | 14.979 | 65.082 | | NORMAL |
| 1/21 09:01:10 | 14.907 | 64.772 | | NORMAL |
| 1/21 09:01:20 | 14.836 | 64.461 | | NORMAL |
| ... | ... | ... | | NORMAL |
| 1/22 15:00:00 | 14.121 | 61.356 | | ABNORMAL |
| 1/22 15:00:10 | 14.050 | 61.047 | | ABNORMAL |
| 1/22 15:00:20 | 13.979 | 60.737 | | ABNORMAL |
| 1/22 15:00:30 | 13.907 | 60.427 | | ABNORMAL |
| 1/22 15:00:40 | 13.836 | 60.116 | | ABNORMAL |
| 1/22 15:00:50 | 13.764 | 59.806 | | ABNORMAL |
| 1/22 15:01:00 | 13.693 | 59.495 | | ABNORMAL |
| 1/22 15:01:10 | 14.264 | 61.978 | | ABNORMAL |
| 1/21 09:04:20 | 14.193 | 61.668 | | ABNORMAL |
| ... | ... | ... | | ABNORMAL |

FIG.16

**(A)**

CANNOT BE SEALED — N0

TEMPERATURE MEASUREMENT IS INACCURATE — N2
SEALING PRESSURE IS WEAK — N3
SEALER SURFACE IS NOT SUFFICIENTLY WARMED — N4
TEMPERATURE CANNOT BE MEASURED — N5
UNSUITABLE TEMPERATURE (FILM CONVEYANCE MAIN/SUB SPEED AND SEAL TEMPERATURE DO NOT MATCH) — N6
UNSUITABLE TEMPERATURE (FILM THICKNESS AND SEAL TEMPERATURE DO NOT MATCH) — N7
TEMPERATURE DOES NOT RISE — N8

THERMOCOUPLE DETERIORATION — N9
PRESS ROLLER WEAR — N10
PRESSING SPRING DETERIORATION — N11
WARM-UP PROCEDURE IS IGNORED/NO PROCEDURE — N12
THERMOCOUPLE DISCONNECTION — N13
SETTING ERROR OF SET TEMPERATURE AND CONVEYANCE SPEED — N14
SETTING ERROR OF SET TEMPERATURE AND FILM THICKNESS — N15
HEATER DETERIORATION — N16

WEAK ADHESION — N1

**(B)**

=

control.graphml

```
<?xml version="1.0" encoding="utf-8"?>
<graphml xmlns="http://graphml.graphdrawing.org/xmlns" xmlns:xsi="http://www.w3.org/20
<key attr.name="directed" attr.type="boolean" for="edge" id="d1" />
<graph edgedefault="directed">
    <node id="" cannot be sealed">
    </node>
    <node id="" temperature measurement is inaccurate">
    </node>
    <node id="" sealing pressure is weak">
    </node>
    <node id="" sealer surface is not sufficiently warmed">
    </node>
    <node id="" temperature cannot be measured">
    </node>
    ...
    <edge source="" temperature measurement is inaccurate" target="" cannot be sealed">
        <data key="d1">True</data>
    </edge>
    <edge source="" sealing pressure is weak" target="" cannot be sealed">
        <data key="d1">True</data>
    </edge>
    <edge source="" sealer surface temperature is not sufficiently warmed" target="" cannot be sealed">
        <data key="d3">True</data>
    </edge>
    ...
</graph>
</graphml>
```

INFORMATION OF NODE

INFORMATION OF EDGE (ARROW)

**(C)**

SEAL ADHESION STRENGTH
CANNOT BE SEALED, WEAK ADHESION — N20

SEAL TEMPERATURE
TEMPERATURE MEASUREMENT IS INACCURATE, UNSUITABLE TEMPERATURE, TEMPERATURE DOES NOT RISE, TEMPERATURE CANNOT BE MEASURED, SEALER SURFACE IS NOT SUFFICIENTLY WARMED
CurrentTemperature CenterSeal — N21

SEAL PRESSURE
SEALING PRESSURE IS WEAK — N22

FILM CONVEYANCE MAIN SPEED
UNSUITABLE TEMPERATURE
FilmFeedMain — N23

FILM CONVEYANCE SUB SPEED
UNSUITABLE TEMPERATURE
FilmFeedSub — N24

FILM THICKNESS
SETTING ERROR OF FILM THICKNESS — N25

THERMOCOUPLE STATE
THERMOCOUPLE DISCONNECTION, THERMOCOUPLE DETERIORATION — N26

WARM-UP PROCEDURE STATE
WARM-UP PROCEDURE IS IGNORED/NO WARM-UP PROCEDURE — N27

HEATER STATE
HEATER DETERIORATION — N28

SEALER SET TEMPERATURE
SETTING ERROR OF SEALER SET TEMPERATURE
CenterHeaterDPC_MV — N29

PRESS ROLLER STATE
PRESS ROLLER WEAR — N30

PRESSING SPRING STATE
PRESSING SPRING DETERIORATION — N31

FILM CONVEYANCE SETTING SPEED
SETTING ERROR OF FILM CONVEYANCE SPEED
FilmFeed_MV — N32

FIG.17

FIG.18

# FIG.19

EP 4 307 061 A1

# FIG.20

# FIG.21

EP 4 307 061 A1

FIG.22

VARIABLE LIST

| Var_Name ▼ | VARIABLE NAME ▼ |
|---|---|
| FilmFeedSub | FILM CONVEYING AXIS (SUB) |
| TopSeal | TOP SEAL AXIS |
| ProductFeed | CONVEYOR AXIS |
| FilmFeedMain | FILM CONVEYING AXIS (MAIN) |
| ProductMisplaceDetectionSensorSignal | WORK DISPLACEMENT DETECTION SENSOR |
| ProductOverMountDetectionSensorSignal | WORK RUN-ON DETECTION SENSOR |
| ProductDetectionSensorSignal | WORK DETECTION SENSOR |
| CenterHeaterDPC_MV | CENTER SEAL SETTING TEMPERATURE |
| TopSealUpHeaterDPC_MV | TOP SEAL UPPER SETTING TEMPERATURE |
| TopSealLowHeaterDPC_MV | TOP SEAL LOWER SETTING TEMPERATURE |
| CurrentTemperatureUpperTopSeal | TOP SEAL UPPER TEMPERATURE |
| CurrentTemperatureLowerTopSeal | TOP SEAL LOWER TEMPERATURE |
| CurrentTemperatureCenterSeal | CENTER SEAL TEMPERATURE |
| RoomTemperature | ROOM TEMPERATURE |
| RoomHumidity | ROOM HUMIDITY |
| ResFilmLength | REMAINING AMOUNT OF FILM |

**INTERNATIONAL SEARCH REPORT**

| International application No. |
| --- |
| **PCT/JP2021/047191** |

**A.    CLASSIFICATION OF SUBJECT MATTER**

*G05B 19/418*(2006.01)i; *G06Q 50/04*(2012.01)i
FI:    G05B19/418 Z; G06Q50/04

According to International Patent Classification (IPC) or to both national classification and IPC

**B.    FIELDS SEARCHED**

Minimum documentation searched (classification system followed by classification symbols)
    G05B19/418; G06Q50/04

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)


**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2009-064407 A (OMRON CORP.) 26 March 2009 (2009-03-26) in particular, paragraphs [0027], [0072]-[0074], fig. 20 | 1--2, 4, 6--8 |
| A | | 3, 5 |
| Y | US 4870575 A (ITT CORP.) 26 September 1989 (1989-09-26) in particular, column 5, line 43 to column 6, line 16 | 1--2, 4, 6--8 |
| A | | 3, 5 |
| A | JP 2020-115311 A (OMRON CORP.) 30 July 2020 (2020-07-30) entire text, all drawings | 1-8 |
| A | JP 2009-301134 A (OMRON CORP.) 24 December 2009 (2009-12-24) entire text, all drawings | 1-8 |
| A | JP 2016-99930 A (YOKOGAWA ELECTRIC CORP.) 30 May 2016 (2016-05-30) entire text, all drawings | 1-8 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 January 2022** | **08 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/047191**

| Patent document cited in search report | | | Publication date (day/month/year) | Patent family member(s) | | | Publication date (day/month/year) |
|---|---|---|---|---|---|---|---|
| JP | 2009-064407 | A | 26 March 2009 | (Family: none) | | | |
| US | 4870575 | A | 26 September 1989 | (Family: none) | | | |
| JP | 2020-115311 | A | 30 July 2020 | CN entire text, all drawings EP | 113196313 3913549 | A A1 | |
| JP | 2009-301134 | A | 24 December 2009 | (Family: none) | | | |
| JP | 2016-99930 | A | 30 May 2016 | US entire text, all drawings EP | 2016/0148111 3026613 | A1 A1 | |

Form PCT/ISA/210 (patent family annex) (January 2015)

**REFERENCES CITED IN THE DESCRIPTION**

**Patent documents cited in the description**

- JP 2009064407 A